# EUROPEAN PATENT SPECIFICATION

(11) **EP 3 849 148 B1**
(45) Date of publication and mention of the grant of the patent: **21.08.2024**
(21) Application number: 19868002.7
(22) Date of filing: 26.09.2019
(51) Int. Cl.: H04L 5/00, H04L 27/34, H04W 72/04, H04J 13/16, H04L 69/04, H04W 72/23

(54) **COMMUNICATION METHOD AND APPARATUS FOR ETHERNET DATA**
KOMMUNIKATIONSVERFAHREN UND -VORRICHTUNG FÜR ETHERNET-DATEN
PROCÉDÉ ET APPAREIL DE COMMUNICATION POUR DONNÉES ETHERNET

(30) Priority: 28.09.2018 CN 201811142736
(43) Date of publication of application: 14.07.2021
(73) Proprietor: HUAWEI TECHNOLOGIES CO., LTD., Shenzhen, Guangdong 518129 (CN)
(72) Inventor: XU, Xiaoying, Shenzhen, Guangdong 518129 (CN); HUANG, Qufang, Shenzhen, Guangdong 518129 (CN); ZENG, Qinghai, Shenzhen, Guangdong 518129 (CN)
(74) Representative: MERH-IP Matias Erny Reichl Hoffmann Patentanwälte PartG mbB
(86) International application number: PCT/CN2019/108019
(87) International publication number: WO 2020/063709

(56) References cited:
- WO-A1-2017/173038
- WO-A1-2018/064279
- WO-A2-2015/142469
- WO-A2-2016/145371
- VIVO: "Ll impacts on DL/UL intra-UE prioritization/multiplexing", 3GPP TSG RAN MEETING #81, RP-181660, 13 September 2018 (2018-09-13), XP051512940
- ZTE: "Clarification of NRS presence", 3GPP TSG RAN WG1 MEETING #88BIS, RL-1705482, 7 April 2017 (2017-04-07), XP051250938

## Description

### TECHNICAL FIELD

This application relates to the communications field, and more specifically, to a communication method and an apparatus for Ethernet data.

### BACKGROUND

Ethernet is a local area network communications technology, and data is transmitted over wired Ethernet in a current industrial scenario. Herein, the data transmitted based on an Ethernet communications technology may be referred to as Ethernet data for short. In addition, rapid development of wireless communications provides infinite possibilities for flexibility, mobility, diversity, and improvement of transmission in future factories. Therefore, in the industrial scenario, Ethernet data may alternatively be transmitted through the wireless communications. For example, a control console sends an instruction to a machine device over a wireless network, and the machine device performs a corresponding action according to the received instruction and reports status information of the machine device to a server.

WO 2017/173038 A1 discloses a method for reducing latency in LTE Advanced transmission using short transmission time interval (sTTI) resource types and sTTI resource configurations. Further, it is disclosed in this document that a DCI scrambled with a first radio network temporary identifier (RNTI) associated with at least one sTTI transmission may be used.

WO 2018/064279 A1 discloses a method and apparatus for use in a wireless transmit receive unit (WTRU) for receiving system information. The WTRU may start monitoring a downlink control channel for information (e.g., downlink control information (DCI)) within a time window, wherein the time window may be determined, configured, or indicated. A DCI scrambled with an RNTI for a broadcasting signal (e.g., SI-RNTI) may be monitored in a downlink control channel search space within a time window when there is selective beam sweeping with an aperiodic broadcasting signal. Therefore, how to perform communication for Ethernet data in a wireless network has become an urgent problem to be resolved.

### SUMMARY

This application provides a communication method and an apparatus for Ethernet data, to perform wireless communication for Ethernet data. The claimed subject-matter is as set out in the appended set of claims.

According to a first aspect, a communication method for Ethernet data is provided. The method includes:
A terminal device receives downlink control information DCI from a network device, where the DCI is scrambled by using a first radio network temporary identifier RNTI, the first RNTI is an RNTI for an Ethernet packet, and the DCI includes information used to indicate a time-frequency resource carrying the Ethernet packet.

The terminal device receives the Ethernet packet from the network device on the time-frequency resource indicated by the DCI.

Therefore, according to the Ethernet data processing method in this embodiment of this application, the DCI is scrambled by using an RNTI dedicated to Ethernet data, to reduce interference to a terminal device other than a terminal device that needs to receive data of another type. In this way, the Ethernet data can be transmitted in a wireless network, and performance of transmitting the Ethernet data is improved.

In a possible implementation, that the terminal device receives the Ethernet packet from the network device includes:
The terminal device receives a system information block SIB from the network device on the time-frequency resource indicated by the DCI, where the SIB includes the Ethernet packet.

In a possible implementation, the first RNTI is an RNTI for a broadcast-type or groupcast-type Ethernet packet.

In a possible implementation, the DCI includes first information, and the first information is used to indicate that the packet scheduled by using the DCI is a broadcast-type or groupcast-type Ethernet packet.

In a possible implementation, when the Ethernet packet is a broadcast-type Ethernet packet, a header of the Ethernet packet does not include a broadcast-type media access control MAC address.

In this way, the broadcast-type MAC address is deleted from the broadcast-type Ethernet packet, so that resources can be effectively saved.

In a possible implementation, the method further includes:
The terminal device sends, to the network device, a media access control MAC address associated with the terminal device.

In a possible implementation, that the terminal device sends, to the network device, a MAC address includes:
The terminal device sends a non-access stratum NAS message to the network device, where the NAS message includes the MAC address.

In a possible implementation, the method further includes:
The terminal device receives a request message from the network device, where the request message is used to request the MAC address associated with the terminal device.

In a possible implementation, that the terminal device sends, to the network device, a MAC address includes:

When the MAC address associated with the terminal device changes, the terminal device sends the changed MAC address to the network device.

In a possible implementation, the method further includes:
The terminal device sends compression capability information to the network device, where the compression capability information is used to indicate N Ethernet compression capabilities supported by the terminal device, where N is an integer greater than or equal to 1.

The terminal device receives compression configuration information from the network device, where the compression configuration information is used to indicate a parameter of a first Ethernet compression capability, and the N Ethernet compression capabilities include the first Ethernet compression capability.

The terminal device decompresses the Ethernet packet, where the Ethernet packet is generated based on the parameter of the first Ethernet compression capability.

In a possible implementation, the Ethernet packet includes a first header, the first header includes a first context identifier, and the first context identifier is used to identify first context information; and the method further includes:
The terminal device obtains the first context information based on the first context identifier.

That the terminal device decompresses the Ethernet packet includes:
The terminal device decompresses the Ethernet packet based on the first context information.

According to a second aspect, a communication method for Ethernet data is provided. The method includes:
A network device sends downlink control information DCI to a terminal device, where the DCI is scrambled by using a first radio network temporary identifier RNTI, the first RNTI is an RNTI for an Ethernet packet, and the DCI includes information used to indicate a time-frequency resource carrying the Ethernet packet.

The network device sends the Ethernet packet to the terminal device on the time-frequency resource.

In a possible implementation, that the network device sends the Ethernet packet to the terminal device includes:
The network device sends a system information block SIB to the terminal device on the time-frequency resource, where the SIB includes the Ethernet packet.

In a possible implementation, the first RNTI is an RNTI for a broadcast-type or groupcast-type Ethernet packet.

In a possible implementation, the DCI includes first information, and the first information is used to indicate that the packet scheduled by using the DCI is a broadcast-type or groupcast-type Ethernet packet.

In a possible implementation, the network device is an access network device, and a common quality of service QoS flow is established between the access network device and a core network device.

The method further includes:
The network device receives the Ethernet packet from the common QoS flow.

In a possible implementation, the method further includes:
The network device receives, from the terminal device, a media access control MAC address associated with the terminal device.

In a possible implementation, that the network device receives, from the terminal device, a MAC address includes:
The network device receives a non-access stratum NAS message from the terminal device, where the NAS message includes the MAC address.

In a possible implementation, the method further includes:
The network device sends a request message to the terminal device, where the request message is used to request the MAC address associated with the terminal device.

In a possible implementation, the method further includes:
The network device receives compression capability information from the terminal device, where the compression capability information is used to indicate N Ethernet compression capabilities supported by the terminal device, where N is an integer greater than or equal to 1.

The network device sends compression configuration information to the terminal device, where the compression configuration information is used to indicate a parameter of a first Ethernet compression capability, and the N Ethernet compression capabilities include the first Ethernet compression capability.

The network device generates the Ethernet packet based on the parameter of the first Ethernet compression capability.

In a possible implementation, the Ethernet packet includes a first header, the first header includes a first context identifier, and the first context identifier is used to identify first context information.

According to a third aspect, a communication method for Ethernet data is provided. The method includes:
A terminal device receives a system information block SIB from a network device, where the SIB includes an Ethernet packet.

The terminal device obtains the Ethernet packet from the SIB.

Therefore, according to the Ethernet packet processing method provided in this embodiment of this application, a broadcast-type Ethernet packet is sent by using the SIB, to efficiently notify the terminal device to receive the Ethernet packet, thereby improving transmission efficiency.

In a possible implementation, the method further includes:
The terminal device receives a paging message from the network device, where the paging message includes indication information, and the indication information is used to indicate that the SIB includes the Ethernet packet.

In this way, the indication information is added to the paging message, so that a paging message sending mechanism can be effectively used. To be specific, the terminal device receives the paging message in a time periodicity to detect whether there is a message for the terminal device, thereby reducing design complexity, and improving reliability of receiving the packet by the terminal device.

In a possible implementation, the method includes:
The terminal device receives downlink control information DCI from the network device, where the DCI is scrambled by using a first radio network temporary identifier RNTI, the first RNTI is an RNTI for the Ethernet packet, and the DCI includes information used to indicate a time-frequency resource carrying the Ethernet packet.

In a possible implementation, the DCI includes first information.

The first information is used to indicate that the packet scheduled by using the DCI is a broadcast-type or groupcast-type Ethernet packet.

In a possible implementation, when the Ethernet packet is a broadcast-type Ethernet packet, a header of the Ethernet packet does not include a broadcast-type media access control MAC address.

In this way, the broadcast-type MAC address is deleted from the broadcast-type Ethernet packet, so that resources can be effectively saved.

In a possible implementation, the method further includes:
The terminal device sends, to the network device, a media access control MAC address associated with the terminal device.

In a possible implementation, that the terminal device sends, to the network device, a MAC address includes:

The terminal device sends a non-access stratum NAS message to the network device, where the NAS message includes the MAC address.

In a possible implementation, the method further includes:
The terminal device receives a request message from the network device, where the request message is used to request the MAC address associated with the terminal device.

In a possible implementation, that the terminal device sends, to the network device, a MAC address includes:

When the MAC address associated with the terminal device changes, the terminal device sends the changed MAC address to the network device.

In a possible implementation, the method further includes:
The terminal device sends compression capability information to the network device, where the compression capability information is used to indicate N Ethernet compression capabilities supported by the terminal device, where N is an integer greater than or equal to 1.

The terminal device receives compression configuration information from the network device, where the compression configuration information is used to indicate a parameter of a first Ethernet compression capability, and the N Ethernet compression capabilities include the first Ethernet compression capability.

The terminal device decompresses the Ethernet packet, where the Ethernet packet is generated based on the parameter of the first Ethernet compression capability.

In a possible implementation, the Ethernet packet includes a first header, the first header includes a first context identifier, and the first context identifier is used to identify first context information; and the method further includes:
The terminal device obtains the first context information based on the first context identifier.

That the terminal device decompresses the Ethernet packet includes:

The terminal device decompresses the Ethernet packet based on the first context information.

According to a fourth aspect, a communication method for Ethernet data is provided. The method includes:
A network device generates a system information block SIB, where the SIB includes an Ethernet packet.

The network device sends the SIB.

In a possible implementation, the method further includes:
The network device sends a paging message to the terminal device, where the paging message includes indication information, and the indication information is used to indicate that the SIB includes the Ethernet packet.

In a possible implementation, the method includes:
The network device sends downlink control information DCI to the terminal device, where the DCI is scrambled by using a first radio network temporary identifier RNTI, the first RNTI is an RNTI for the Ethernet packet, and the DCI includes information used to indicate a time-frequency resource carrying the Ethernet packet.

In a possible implementation, the DCI includes first information, and the first information is used to indicate that the packet scheduled by using the DCI is a broadcast-type or groupcast-type Ethernet packet.

In a possible implementation, when the Ethernet packet is a broadcast-type Ethernet packet, a header of the Ethernet packet does not include a broadcast-type media access control MAC address.

In a possible implementation, the method further includes:
The network device receives, from the terminal device, a media access control MAC address associated with the terminal device.

In a possible implementation, that the network device receives, from the terminal device, a media access control MAC address associated with the terminal device includes:

The network device receives a non-access stratum NAS message from the terminal device, where the NAS message includes the MAC address.

In a possible implementation, the method further includes:
The network device sends a request message to the terminal device, where the request message is used to request the MAC address associated with the terminal device.

In a possible implementation, the method further includes:

The network device receives compression capability information from the terminal device, where the compression capability information is used to indicate N Ethernet compression capabilities supported by the terminal device, where N is an integer greater than or equal to 1.

The network device sends compression configuration information to the terminal device, where the compression configuration information is used to indicate a parameter of a first Ethernet compression capability, and the N Ethernet compression capabilities include the first Ethernet compression capability.

The network device generates the Ethernet packet based on the parameter of the first Ethernet compression capability.

In a possible implementation, the Ethernet packet includes a first header, the first header includes a first context identifier, and the first context identifier is used to identify first context information.

According to a fifth aspect, a communication method for Ethernet data is provided. The method includes:
A terminal device receives a request message from a network device, where the request message is used to request a media access control MAC address associated with the terminal device.

The terminal device sends the MAC address to the network device.

In a possible implementation, that the terminal device sends the MAC address to the network device includes:
The terminal device sends a non-access stratum NAS message, where the NAS message includes the MAC address.

Therefore, according to the Ethernet data processing method in this embodiment of this application, the network device sends, to the terminal device, the request message used to request the MAC address of the terminal device, so that the terminal device can report the MAC address to the network device in time. In this way, the network device can learn of the MAC address of the terminal device in time, thereby facilitating data transmission.

According to a sixth aspect, a communication method for Ethernet data is provided. The method includes:
A network device sends a request message to a terminal device, where the request message is used to request a media access control MAC address associated with the terminal device.

The network device receives the MAC address from the terminal device.

In a possible implementation, that the network device receives the MAC address from the terminal device includes:
The network device receives a non-access stratum NAS message from the terminal device, where the NAS message includes the MAC address.

According to a seventh aspect, a communication method for Ethernet data is provided. The method includes:
When a media access control MAC address associated with a terminal device changes, the terminal device sends the changed MAC address to a network device.

In a possible implementation, that the terminal device sends the changed MAC address to a network device includes:
The terminal device sends a non-access stratum NAS message, where the NAS message includes the changed MAC address.

According to an eighth aspect, a communication method for Ethernet data is provided. The method includes:
An access network device receives an Ethernet packet sent by a core network device from a common quality of service QoS flow.

The access network device sends the Ethernet packet in a broadcast manner or a groupcast manner.

According to a ninth aspect, an apparatus for Ethernet data is provided. The apparatus is configured to perform the method according to any possible implementation of any one of the foregoing aspects. Specifically, the apparatus includes a unit configured to perform the method according to any possible implementation of any one of the foregoing aspects.

According to a tenth aspect, another apparatus for Ethernet data is provided. The apparatus includes a transceiver, a memory, and a processor. The transceiver, the memory, and the processor communicate with each other through an internal connection path. The memory is configured to store an instruction. The processor is configured to execute the instruction stored in the memory, to control a receiver to receive a signal, and control a transmitter to send a signal. In addition, when the processor executes the instruction stored in the memory, the processor is enabled to perform the method according to any possible implementation of any one of the foregoing aspects.

According to an eleventh aspect, a computer program product is provided. The computer program product includes computer program code; and when the computer program code is run on a computer, the computer is enabled to perform the method according to any one of the foregoing aspects.

According to a twelfth aspect, a computer-readable medium is provided. The computer-readable medium is configured to store a computer program, and the computer program includes an instruction used to perform the method according to any one of the foregoing aspects.

According to a thirteenth aspect, a chip is provided. The chip includes a processor, configured to invoke an instruction from a memory and execute the instruction stored in the memory, so that a communications device on which the chip is installed performs the method according to any one of the foregoing aspects.

According to a fourteenth aspect, another chip is provided. The chip includes an input interface, an output interface, a processor, and a memory. The input interface, the output interface, the processor, and the memory are connected to each other through an internal connection path. The processor is configured to execute code in the memory. When the code is executed, the processor is configured to perform the method according to any one of the foregoing aspects.

### BRIEF DESCRIPTION OF DRAWINGS

FIG. 1 is a schematic architectural diagram of a mobile communications system to which an embodiment of this application is applicable;
FIG. 2 is another schematic architectural diagram of a mobile communications system to which an embodiment of this application is applicable;
FIG. 3 is a schematic diagram of an EtherCAT frame according to an embodiment of this application;
FIG. 4 is a schematic interaction diagram of a communication method for Ethernet data according to an embodiment of this application;
FIG. 5 is a schematic diagram of a frame format of a first Ethernet packet according to an embodiment of this application;
FIG. 6 is a schematic diagram of a frame format of a second Ethernet packet according to an embodiment of this application;
FIG. 7 is a schematic diagram of a frame format of a packet used to carry feedback information according to an embodiment of this application;
FIG. 8 is a schematic interaction diagram of another communication method for Ethernet data according to an embodiment of this application;
FIG. 9 is a schematic interaction diagram of another communication method for Ethernet data according to an embodiment of this application;
FIG. 10 is a schematic interaction diagram of another communication method for Ethernet data according to an embodiment of this application;
FIG. 11 is a schematic interaction diagram of another communication method for Ethernet data according to an embodiment of this application;
FIG. 12 is a schematic interaction diagram of another communication method for Ethernet data according to an embodiment of this application;
FIG. 13 is a diagram of transition of an Ethernet compression state according to an embodiment of this application;
FIG. 14 shows an apparatus for Ethernet data according to an embodiment of this application; and
FIG. 15 shows another apparatus for Ethernet data according to an embodiment of this application.

### DESCRIPTION OF EMBODIMENTS

The following describes technical solutions of this application with reference to the accompanying drawings.

The technical solutions of embodiments of this application may be used in various communications systems, such as a global system for mobile communication (global system for mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communications system, and a 5th generation (5th generation, 5G) system or a new radio (new radio, NR) system.

A network device in the embodiments of this application may be a device configured to communicate with a terminal device. The network device may be a base transceiver station (base transceiver station, BTS) in the global system for mobile communications (global system for mobile communications, GSM) system or the code division multiple access (code division multiple access, CDMA) system, a NodeB (NodeB, NB) in the wideband code division multiple access (wideband code division multiple access, WCDMA) system, an evolved NodeB (evolved NodeB, eNB or eNodeB) in the LTE system, or a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like. Alternatively, the network device may be a core network device, where the core network device may be a control plane and user plane (control plane and user plane, CU) network element, or may be a control plane function network element CU-CP such as a session management function (session management function, SMF) network element, an access and mobility management function (access and mobility management function, AMF) network element, or a user plane function (user plane function, UPF) network element in a CU separation scenario.

The terminal device in the embodiments of this application may be user equipment, an access terminal, a subscriber unit, a subscriber station, a mobile station, a remote station, a remote terminal, a mobile device, a user terminal, a terminal, a wireless communications device, a user agent, or a user apparatus; or may be a robot, an operation arm, or the like. This is not limited in the embodiments of this application.

In the embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing by using a process (process). For example, the operating system is a Linux operating system, a UNIX operating system, an Android operating system, an iOS operating system, or a Windows operating system. The application layer includes applications such as a browser, an address book, word processing software, and instant communications software. In addition, a specific structure of an execution body of a method provided in the embodiments of this application is not specifically limited in the embodiments of this application, provided that a program that records code of the method provided in the embodiments of this application can be run to perform communication according to the method provided in the embodiments of this application. For example, the execution body of the method provided in the embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel and various other media that can store, include, and/or carry an instruction and/or data.

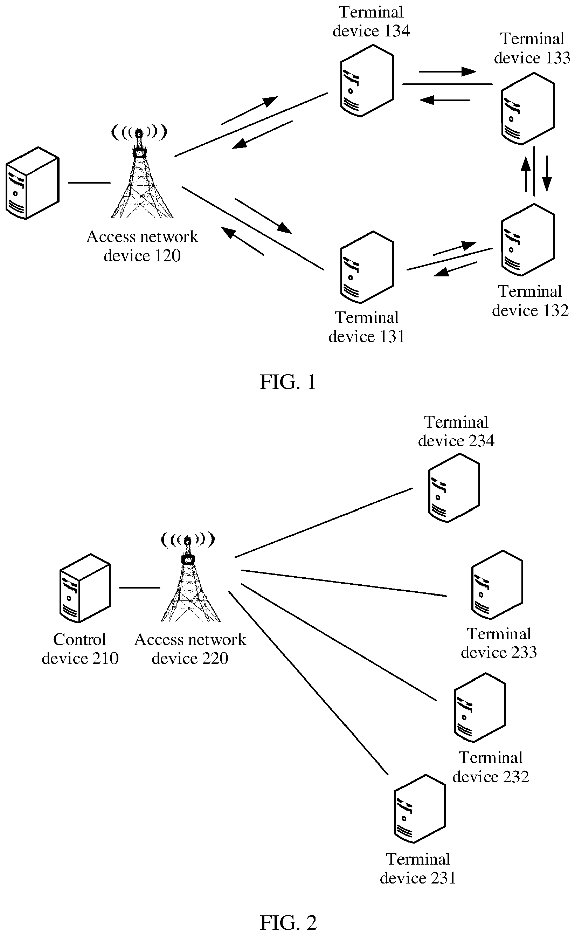

FIG. 1 is a schematic architectural diagram of a mobile communications system to which an embodiment of this application is applicable. FIG. 1 shows a mobile communications system with a ring topology. The mobile communications system includes a control device 110, an access network device 120, and at least one terminal device (for example, a terminal device 131 to a terminal device 134 in FIG. 1). The terminal device 131 and the terminal device 134 are connected to the access network device 120 in a wireless manner. The terminal device 132 and the terminal device 133 are connected to the access network device 120 respectively through the terminal device 131 and the terminal device 134. In a scenario in which data needs to be transmitted between the access network device 120 and the terminal device 132 or the terminal device 133, the terminal device 131 or the terminal device 134 may be understood as a relay device. For example, if the access network device needs to send downlink data to the terminal device 132, a transmission path of the downlink data may be: the access network device 120 - the terminal device 131 - the terminal device 132, and the terminal device 131 may be understood as a relay device; or a transmission path of the downlink data may be the access network device 120 - the terminal device 134 - the terminal device 133 - the terminal device 132, and the terminal device 134 and the terminal device 133 may be understood as relay devices. The access network device 120 is connected to the control device 110 in a wireless or wired manner. The control device 110 and the access network device 120 may be independent physical devices different from each other, or functions of the control device 110 and logical functions of the access network device 120 may be integrated into a same physical device, or some functions of the control device 110 and some functions of the access network device 120 may be integrated into one physical device. The terminal device may be at a fixed location or may be movable. FIG. 1 is merely a schematic diagram, and the communications system may further include another network device, for example, may further include a wireless relay device and a wireless backhaul device, which are not drawn in FIG. 1. Quantities of control devices, access network devices, and terminal devices included in the mobile communications system are not limited in this embodiment of this application.

FIG. 2 is another schematic architectural diagram of a mobile communications system to which an embodiment of this application is applicable. FIG. 2 shows a mobile communications system with a star topology. The mobile communications system includes a control device 210, an access network device 220, and at least one terminal device (for example, a terminal device 231 to a terminal device 234 in FIG. 2). The access network device 220 is connected to any terminal device in a wireless manner, and is connected to the control device 210 in a wireless or wired manner. The control device 210 and the access network device 220 may be independent physical devices different from each other, or functions of the control device 210 and logical functions of the access network device 220 may be integrated into a same physical device, or some functions of the control device 210 and some functions of the access network device 220 may be integrated into one physical device. The terminal device may be at a fixed location or may be movable. FIG. 2 is merely a schematic diagram, and the communications system may further include another network device, for example, may further include a wireless relay device and a wireless backhaul device, which are not drawn in FIG. 2. Quantities of control devices, access network devices, and terminal devices included in the mobile communications system are not limited in this embodiment of this application.

It should be noted that "at least one" in the embodiments of this application indicates "one or more", and the two descriptions are interchangeable.

As described in the background, an objective of the technical solutions provided in the embodiments of this application is to transmit Ethernet data in a wireless network. Based on this, the embodiments of this application mainly describe, in the following four aspects, a method for transmitting Ethernet data in a wireless network:
in a first aspect, how to compress the Ethernet data;
in a second aspect, how to transmit broadcast-type or groupcast-type Ethernet data;
in a third aspect, how a terminal device reports a destination media access control (media access control, MAC) address; and
in a fourth aspect, how a network device locates and searches for the terminal device.

It should be understood that an embodiment in each of the four aspects may be independently used, or embodiments in any two or three aspects or in the four aspects may be used in combination. This is not limited in the embodiments of this application.

For ease of description, the following first describes the embodiment in each of the foregoing aspects in detail, and then describes in detail the embodiments used in combination that are in the two, three, or four aspects.

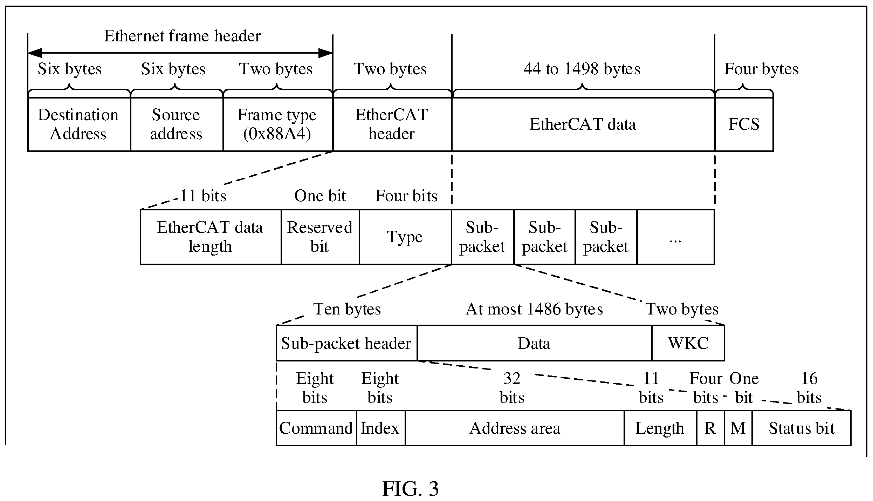

The following describes the embodiment in the first aspect in detail with reference to FIG. 3 to FIG. 9.

First, for ease of understanding, a frame format of an Ethernet frame is briefly described by using an EtherCAT frame as an example.

FIG. 3 is a schematic diagram of an EtherCAT frame. As shown in FIG. 3, a frame format of the EtherCAT frame includes an Ethernet frame header area, an EtherCAT header area, an EtherCAT data area, and a frame check sequence (Frame Check Sequence, FCS) area. The Ethernet frame header area includes a destination address, a source address, and a frame type. The destination address is a MAC address of a receiver, and the source address is a MAC address of a sender. The MAC address is also referred to as a physical address. The frame type is used to identify an upper-layer protocol included in a data field. The EtherCAT header area includes an EtherCAT data length, a reserved bit, and a type. The EtherCAT data area includes a data header of two bytes and a data area of 44 to 1498 bytes. The data area includes one or more EtherCAT sub-packets, and each sub-packet corresponds to an independent device and slave-station storage area. The FCS area is used to check integrity of the frame in a transmission process.

Table 1 describes a definition of each field in the Ethernet frame header area, Table 2 describes a definition of each field in the EtherCAT header area, and Table 3 describes a definition of each field in each sub-packet in the EtherCAT data area.

**Table 1**

| Name | Description |
|---|---|
| Destination address | MAC address of a receiver |
| Source address | MAC address of a sender |
| Frame type | 0x88A4 |

**Table 2**

| Name | Description |
|---|---|
| EtherCAT data length | Length of an EtherCAT data area, namely, total length of all sub-packets |
| Type | 1: indicates communication with a slave station; another value: is reserved |

**Table 3**

| Name | Description |
|---|---|
| Command | Addressing mode and read/write mode |
| Index | Frame encoding |
| Address area | Slave-station address |
| Length | Length of a packet data area |
| R | Reserved bit |
| M | Subsequent packet flag |
| Status bit | Interrupt arrival flag |
| Data area | Sub-packet data structure, defined by a user |
| WKC | Working counter |

In a point-to-point transmission process of a common Ethernet service, a plurality of packets encapsulated in a same frame format have a large amount of repeatedly transmitted content, that is, the large amount of repeatedly transmitted content does not change in a plurality of transmission processes. For example, the destination address, the source address, the frame type, and the fields in the EtherCAT header area in the EtherCAT frame shown in FIG. 3 are repeatedly transmitted content. In addition, the data length may be derived based on information about a payload (payload) of a packet, and actually may not need to be transmitted in the transmission process. In addition, there is a 64-bit (8-byte) preamble character at the beginning of an Ethernet frame in each format. The first seven bytes are referred to as a preamble (Preamble), and content of the preamble is a hexadecimal number 0xAA. The last byte is a frame start flag 0xAB, and indicates a start of the Ethernet frame. A function of the preamble character is to enable a receive end to perform synchronization and prepare to receive a data frame. A 4-byte frame check sequence (frame check sequence, FCS) follows the variable-length data field, is content required for transmission over an Ethernet, and does not need to be carried in a transmission process in a wireless system.

Therefore, in the embodiments of this application, transmission between a terminal device and a network device is used as an example, and by way of example rather than limitation, at least one of the following content may be referred to as context information or static information:
content that does not change in a packet transmitted between the terminal device and the network device for a plurality of times; or other field information that can be derived based on information about a payload (payload) of a packet.

Naturally, compressing Ethernet data in the embodiments of this application means removing context information from a packet, to be specific, compressing Ethernet data means reducing information about a field other than a data area in an Ethernet packet, to compress the Ethernet data.

It should be understood that the Ethernet packet in the embodiments of this application is a packet carried on an ethertype session (ethertype session). Similarly, the Ethernet data is data carried on the ethertype session (ethertype session).

The foregoing briefly describes the frame format of the Ethernet frame by using the frame format of the EtherCAT frame as an example. The following describes the context information in the embodiments of this application based on various different frame formats.

### Frame format 1: Ethernet 802.3 raw frame format

Table 4 shows fields in the Ethernet 802.3 raw frame format. By way of example rather than limitation, context information may include a destination MAC address field, a source MAC address field, and a type field. A total length is a length of a data part, may be derived from the length of the data part, and does not need to be carried in a transmission process.

**Table 4**

| Six bytes | Six bytes | Two bytes | Two bytes | 44 to 1498 bytes | Four bytes |
|---|---|---|---|---|---|
| Destination MAC address | Source MAC address | Total length | 0xFFFF (type of the frame format) | Data | FCS |

### Frame format 2: Ethernet 802. 3 SAP frame format

**Table 5**

| Six bytes | Six bytes | Two bytes | One byte | One byte | One byte | 43 to 1497 bytes | Four bytes |
|---|---|---|---|---|---|---|---|
| Destination MAC address | Source MAC address | Total length | DSAP | SSAP | Control | Data | FCS |

Table 5 shows fields in the Ethernet 802.3 SAP frame format. In the Ethernet 802.3 SAP frame format, two-byte 0xFFFF in the Ethernet 802.3 raw frame is converted into a one-byte DSAP and a one-byte SSAP. In addition, a one-byte "control" field is added to form an 802.2 logical link control (Logical Link Control, LLC) header. LLC provides a connectionless (LLC type 1) network service and a connection-oriented (LLC type 2) network service. LLC 1 is used in the Ethernet, and LLC 2 is used in an IBM network environment and a system network architecture (system network architecture, SNA) network environment. The newly added 802.2 LLC header includes two service access points: a source service access point (source service access point, SSAP) and a destination service access point (destination service access point, DSAP). The two service access points are used to identify a type of upper-layer data carried in an Ethernet frame. For example, a hexadecimal number 0x06 indicates IP data, a hexadecimal number 0xE0 indicates Novell protocol data, and a hexadecimal number 0xF0 indicates IBM NetBIOS protocol data. Generally, the one-byte "control" field is not used (where the field is usually set to 0x03, indicating that an 802.2 unnumbered data format of the connectionless service is used).

In the Ethernet 802.3 SAP frame format, by way of example rather than limitation, context information may include a destination MAC address field, a source MAC address field, the DSAP field, the SSAP field, and the control field. A total length may be derived from a length of a data part, and does not need to be carried.

### Frame format 3: Ethernet 802. 3 SNAP frame format

**Table 6**

| Six bytes | Six bytes | Two bytes | One byte | One byte | One byte | Three bytes | Two bytes | 38 to 1492 bytes | Four bytes |
|---|---|---|---|---|---|---|---|---|---|
| Destination MAC address | Source MAC address | Total length | 0xAA | 0xAA | 0x03 | OUI ID | Type | Data | FCS |

Table 6 shows fields in the Ethernet 802. 3 SNAP frame format. Main differences of the Ethernet 802. 3 SNAP frame format from the Ethernet 802. 3 SAP frame format lie in:
First, content in a DSAP field and an SSAP field that are of two bytes is fixed, and separately has a value of a hexadecimal number 0xAA.
Second, content in a one-byte "control" field is fixed, and has a value of a hexadecimal number 0x03.
Third, a SNAP field is added, and includes the following two parts:
   a newly added three-byte organizationally unique identifier (organizationally unique identifier, OUI ID) field, whose value is usually equal to the first three bytes of a MAC address, namely, code of a network adapter vendor; and
   a two-byte "type" field, used to identify a type of upper-layer data carried in an Ethernet frame.

In the Ethernet 802. 3 SNAP frame format, by way of example rather than limitation, context information may include a destination MAC address field, a source MAC address field, the DSAP field, the SSAP field, the control field, the OUI ID field, and the type field.

### Frame format 4: Ethernet II frame format

**Table 7**

| Six bytes | Six bytes | Two bytes | 46 to 1500 bytes | Four bytes |
|---|---|---|---|---|
| Destination MAC address | Source MAC address | Type | Data | FCS |

Table 7 shows fields in the Ethernet II frame format. In the Ethernet II frame format, a minimum length is 64 (6+6+2+46+4) bytes, and a maximum length is 1518 (6+6+2+1500+4) bytes. The first 12 bytes respectively identify a MAC address of a source node that sends a packet and a MAC address of a destination node that receives the packet. The following two bytes are used to identify a type of upper-layer data carried in the Ethernet packet. For example, a hexadecimal number 0x0800 indicates IP data, a hexadecimal number 0x809B indicates AppleTalk protocol data, and a hexadecimal number 0x8138 indicates Novell protocol data.

In the Ethernet II frame format, by way of example rather than limitation, context information may include a destination MAC address field, a source MAC address field, and a type field.

### Frame format 5: Ethernet frame format

Referring to FIG. 3, for a basic EtherCAT frame, context information may include a destination MAC address field, a source MAC address field, a type field, and a type field that is in an EtherCAT header area. A length field in the EtherCAT header area is a length of all sub-packets, and may be derived from a total length of a packet field.

For a frame format that is of a basic EtherCAT frame and that has a virtual local area network (virtual local area network, VLAN) tag, by way of example rather than limitation, context information may include a destination MAC address field, a source MAC address field, a type field, the VLAN tag, and a type field that is in an EtherCAT header area; or context information may include a destination MAC address field, a source MAC address field, and a type field. It may be understood that, for implementation optimization, a transmit end may directly delete the VLAN tag, and does not need to store the VLAN tag as a part of the context information or send the VLAN tag to a receive end.

For an EtherCAT frame including user datagram protocol (user datagram protocol, UDP) data or IP data, by way of example rather than limitation, context information may include a destination MAC address field, a source MAC address field, a type field, and a type field that is in an EtherCAT header area.

### Frame format 6: 802.1Q frame format

**Table 8**

| Six bytes | Six bytes | Four bytes | Two bytes | 42 to 1500 bytes | Four bytes |
|---|---|---|---|---|---|
| Destination MAC address | Source MAC address | VLAN-1 | Type | Data | FCS |

Table 8 shows fields in the 802.1Q frame format. By way of example rather than limitation, context information may include a destination MAC address field, a source MAC address field, a VLAN-1 field, and a type field; or context information may include a destination MAC address field, a source MAC address field, and a type field.

### Frame format 7: 802.1Q-in-Q frame format

**Table 9**

| Six bytes | Six bytes | Four bytes | Four bytes | Two bytes | 38 to 1500 bytes | Four bytes |
|---|---|---|---|---|---|---|
| Destination MAC address | Source MAC address | VLAN-1 | VLAN-2 | Type | Data | FCS |

Table 9 shows fields in the 802.1Q-in-Q frame format. By way of example rather than limitation, context information may include a destination MAC address field, a source MAC address field, a VLAN-1 field, a VLAN-2 field, and a type field; or context information may include a destination MAC address field, a source MAC address field, and a type field.

### Frame format 8: 802.3 frame format

**Table 10**

| Six bytes | Six bytes | Two bytes | 46 to 1498 bytes | Four bytes |
|---|---|---|---|---|
| Destination MAC address | Source MAC address | Length/Type | Data | FCS |

Table 10 shows fields in the 802.3 frame format. By way of example rather than limitation, context information may include a destination MAC address field, a source MAC address field, and a length/type field. A value range 0x0000 to 0x05DC of the length field is variable. If the length/type field is a length field, the length/type field is deducible information and does not need to be carried during transmission. Another value of the field has a special meaning, and represents a type of a frame. The field is used as static information, may be used as context information, and does not need to be carried in a transmission process.

The foregoing describes the context information of various different frame formats. It should be understood that the foregoing listed eight frame formats and the corresponding context information are merely examples for description, and should not constitute a limitation on the embodiments of this application. Any frame format and corresponding context information fall within the protection scope of the embodiments of this application.

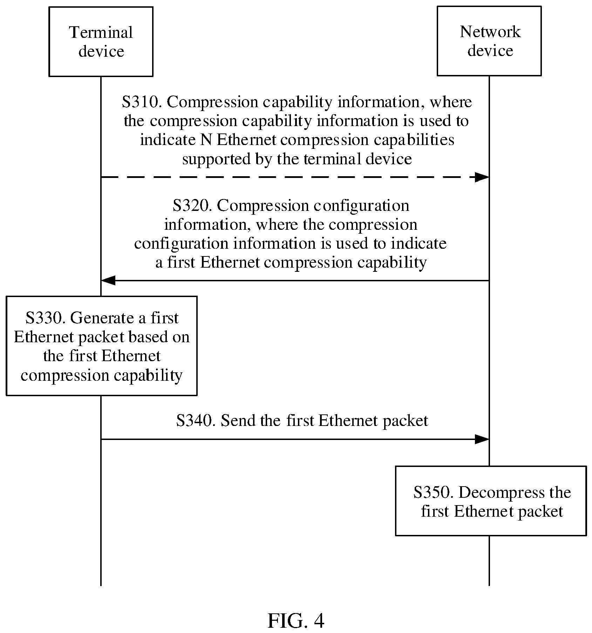

FIG. 4 is a schematic interaction diagram of a communication method 300 for Ethernet data according to an embodiment of this application. In the method 300, a process of compressing Ethernet data is described from the perspective of uplink transmission.

In this embodiment, a terminal device reports an Ethernet compression capability of the terminal device to a network device, the network device configures one or more Ethernet compression capabilities for the terminal device based on the Ethernet compression capability of the terminal device, and the terminal device compresses the Ethernet data based on the Ethernet compression capability configured by the network device, and sends a compressed packet to the network device.

The following describes steps of the method 300.

S310: The terminal device sends compression capability information to the network device, where the compression capability information is used to indicate N Ethernet compression capabilities supported by the terminal device, where N is an integer greater than or equal to 1.

Herein, the Ethernet compression capability indicates a capability of compressing the Ethernet data by the terminal device. Specifically, the Ethernet compression capability indicates whether the terminal device can compress the Ethernet data, and if the terminal device can compress the Ethernet data, further indicates a type of a compressible Ethernet frame format.

In a possible implementation, if the terminal device currently supports only one Ethernet compression capability, the compression capability information may include information used to indicate that a compression capability supported by the terminal device is the Ethernet compression capability. Actually, because the terminal device supports only one Ethernet compression capability, although the compression capability information does not explicitly indicate a specific type of the Ethernet compression capability, after receiving the compression capability information, the network device can learn that the terminal device should support only one Ethernet compression capability, and may learn of or may not need to learn of the type of the supported Ethernet compression capability. This does not affect other behavior of the network device.

In another possible implementation, the compression capability information may include information used to indicate N Ethernet frame formats supported by the terminal device.

That is, one Ethernet compression capability may correspond to one Ethernet frame format, and that the terminal device reports N Ethernet compression capabilities indicates that the terminal device can compress N Ethernet frame formats.

In a specific implementation, an Ethernet frame format may be indicated by using a frame format identifier used to identify the Ethernet frame format.

Examples are as follows:
1 indicates an Ethernet frame format in the 802.3 protocol. Ethernet frame formats in the 802.3 protocol may include an Ethernet 802.3 raw frame format, an Ethernet 802.3 SAP frame format, an Ethernet 802.3 SNAP frame format, and the like.
2 indicates an 802.1Q Ethernet frame format.
3 indicates an 802.1ad (or 802.1Q-In-Q) Ethernet frame format or a VLAN stacking Ethernet frame format.
4 indicates a PROFINET Ethernet frame format.
5 indicates an EtherCAT Ethernet frame format.
6 indicates a Profisafe Ethernet frame format.

S320: The network device sends compression configuration information to the terminal device, where the compression configuration information is used to indicate a parameter of a first Ethernet compression capability, and the N Ethernet compression capabilities include the first Ethernet compression capability.

Herein, the compression configuration information may be understood as information used by the network device to enable the Ethernet compression capability for the terminal device. After receiving the compression configuration information, the terminal device learns that the terminal device can compress the Ethernet data.

Because data compression causes a delay, in this step, the network device may configure the Ethernet compression capability for the terminal device based on a data performance requirement of a system. For example, if the system does not have a high delay requirement on data, the terminal device may be allowed, by using the compression configuration information, to enable the Ethernet compression capability, and further, a quantity of Ethernet compression capabilities that can be enabled by the terminal device may be indicated. If the system has a relatively high delay requirement on data, the terminal device may be prohibited, by using the compression configuration information, from enabling the Ethernet compression capability.

The network device may configure the Ethernet compression capability at a device granularity, a bearer granularity, a logical-channel granularity, or a QoS flow granularity.

For example, the compression configuration information is information for all bearers of the terminal device. That is, the Ethernet compression capability configured by using the compression configuration information is used for all the bearers of the terminal device.

For another example, the compression configuration information is information for one bearer of the terminal device. That is, an Ethernet compression capability for each bearer of the terminal device is independently configured, and one piece of compression configuration information corresponds to one bearer.

For another example, the compression configuration information is information for some of all bearers of the terminal device. That is, a same Ethernet compression capability is used for some bearers of the terminal device, and one piece of compression configuration information corresponds to some bearers.

For another example, the compression configuration information is information for one logical channel of the terminal device. That is, an Ethernet compression capability for each logical channel is independently configured.

For another example, the compression configuration information is information for one quality of service (quality of service, QoS) flow of the terminal device. That is, an Ethernet compression capability for each QoS flow is independently configured.

It should be understood that the compression configuration information is not only used to indicate the parameter of the first Ethernet compression capability. If the network device configures that the terminal device can use a plurality of Ethernet compression capabilities to compress data, the compression configuration information may further be used to indicate a parameter of an Ethernet compression capability other than the first Ethernet compression capability in the plurality of Ethernet compression capabilities. The parameter of the Ethernet compression capability other than the first Ethernet compression capability is similar to the parameter of the first Ethernet compression capability. For brevity, in this embodiment of this application, the parameter of the first Ethernet compression capability is used as an example to describe a parameter of an Ethernet compression capability.

In a possible implementation, the compression configuration information may further include information used to indicate the terminal device to compress only an Ethernet frame packet, carried in an Ethernet frame, whose upper-layer data type is a non-IP type. Optionally, the terminal device may indicate this capability during reporting.

In a possible implementation, the compression configuration information may further include information used to indicate the terminal device to compress only an Ethernet frame packet, carried in an Ethernet frame, whose upper-layer data type is an IP type. Optionally, the terminal device may indicate this capability during reporting.

In a possible implementation, if the terminal device receives Ethernet compression configuration information and robust header compression (robust header compression, ROHC) compression configuration information, and optionally, if the terminal device supports neither ROHC compression nor Ethernet header compression, IP header compression is preferably performed. Optionally, the terminal device may further report whether a capability of simultaneously performing ROHC and Ethernet header compression is supported. The network device may indicate, based on the capability of the terminal, the terminal whether to simultaneously enable an ROHC function and an Ethernet header compression function.

In a possible implementation, the parameter of the first Ethernet compression capability includes an enabling parameter, and the enabling parameter is used to indicate the terminal device to use the first Ethernet compression capability.

The first Ethernet compression capability may be a unique Ethernet compression capability supported by the terminal device (in this case, N=1), or may be one of a plurality of Ethernet compression capabilities supported by the terminal device (in this case, N is greater than 1).

Specifically, if the terminal device supports only one Ethernet compression capability, the enabling parameter may be Boolean indication information, a first value indicates that the terminal device can use the first Ethernet compression capability, and a second value indicates that the terminal device cannot use the first Ethernet compression capability. If the first Ethernet compression capability is one of a plurality of Ethernet compression capabilities supported by the terminal device, and the enabling parameter may indicate that the terminal device can use or cannot use all the Ethernet compression capabilities, the enabling parameter may also be Boolean indication information, a first value indicates that the terminal device can use the first Ethernet compression capability, and a second value indicates that the terminal device cannot use the first Ethernet compression capability.

It should be understood that, although only a solution in which the terminal device can use the Ethernet compression capability is described in this embodiment of this application, another actual indication meaning of the enabling parameter is not affected, that is, the enabling parameter indicates that the terminal device cannot use the Ethernet compression capability. In addition, the enabling parameter may alternatively indicate the terminal device to disable, release, or de-configure the Ethernet compression capability. For example, after the terminal device enables an Ethernet compression capability, the network device indicates the terminal device to disable the Ethernet compression capability.

If the terminal device supports a plurality of Ethernet compression capabilities, and the network device configures that the terminal device can use a part of the Ethernet compression capabilities, the enabling parameter may indicate that the terminal device can compress the Ethernet data, and a specific Ethernet compression capability to be used may further be indicated by using another parameter.

Therefore, in a possible implementation, the parameter of the first Ethernet compression capability includes a frame format parameter used to indicate a first frame format, and the first frame format is a frame format of a first Ethernet packet.

In this way, the terminal device may learn, based on the frame format parameter, that the terminal device can compress Ethernet data generated based on the first frame format.

Certainly, the parameter of the first Ethernet compression capability may not include the enabling parameter, and the terminal device and the network device may negotiate that the frame format parameter in the compression configuration information indicates a frame format that can be compressed by the terminal device. In this way, the terminal device may determine, by using only the frame format parameter, that the terminal device can compress the Ethernet data generated based on the first frame format.

To enable the terminal device to learn of a field that needs to be compressed in the first frame format, this embodiment of this application further provides a possible implementation: The parameter of the first Ethernet compression capability further includes an algorithm parameter used to indicate a compression algorithm of the first frame format.

Specifically, each frame format corresponds to at least one compression algorithm, and a plurality of frame formats may also correspond to a same compression algorithm. Using the first frame format as an example, the compression algorithm is used to indicate how to compress the first frame format, in other words, the compression algorithm may indicate a compressible field in the first frame format, in other words, the compression algorithm indicates a field, in the first frame format, whose content is to be used as context information.

In a standard protocol, each compression algorithm may correspond to a compression protocol, and the compression protocol specifically describes specification information of the compression algorithm, for example, a definition of a compression format.

In a possible configuration manner of indicating the compression algorithm, configuration information received by the terminal device indicates a field, in the first frame format, whose content can be removed to directly send the Ethernet packet. For example, in the uplink transmission, information in a source address field in a header of the Ethernet packet is deleted to send the Ethernet packet.

It should be noted that the parameter of the first Ethernet compression capability may include at least one of the frame format parameter, a compression protocol parameter, or the algorithm parameter. When the parameter of the first Ethernet compression capability includes any one of the three parameters, a compression algorithm used for each frame format may be specified in a protocol: If the parameter of the first Ethernet compression capability includes the frame format parameter, the terminal device learns that the first frame format is to be used to compress the Ethernet data, and may directly obtain, according to the specification in the protocol, the compression algorithm corresponding to the first frame format parameter. If the parameter of the first Ethernet compression capability includes the algorithm parameter, the terminal device learns of the algorithm parameter, and may obtain, according to the specification in the protocol, the first frame format corresponding to the algorithm parameter. If the parameter of the first Ethernet compression capability includes the compression protocol parameter, the terminal device learns of the compression protocol parameter, and may obtain, according to the specification in the protocol, the compression algorithm corresponding to the frame format.

S330: The terminal device generates the first Ethernet packet based on the parameter of the first Ethernet compression capability.

That is, the terminal device compresses the Ethernet data by using the parameter of the first Ethernet compression capability, to be specific, the terminal device removes the context information (or static information) of the Ethernet data, to generate the compressed first Ethernet packet.

It should be noted that the first Ethernet packet may be a PDCP layer packet, or may be an Ethernet packet compressed at another protocol layer. This is not limited in this embodiment of this application. For example, the first Ethernet packet may alternatively be a packet at an application layer (or referred to as an upper layer, upper layer), a service data adaptation protocol (service data adaptation protocol, SDAP) layer, a radio link control (radio link control, RLC) layer, or a MAC layer of the terminal device.

S340: The terminal device sends the first Ethernet packet to the network device.

S350: The network device decompresses the first Ethernet packet.

To interact with another device, the network device needs to continue to encapsulate the first Ethernet packet. Therefore, the network device needs to restore the first Ethernet packet to the uncompressed packet. In other words, the network device needs to add, to the first Ethernet packet, the context information removed by the terminal device, to restore a header area of the first Ethernet packet, thereby completing decompression of the first Ethernet packet.

Therefore, according to the communication method for Ethernet data that is provided in this embodiment of this application, the terminal device reports the Ethernet compression capability of the terminal device to the network device, the network device configures one or more Ethernet compression capabilities for the terminal device based on the Ethernet compression capability of the terminal device, and the terminal device compresses the Ethernet data based on the Ethernet compression capability configured by the network device, and sends the compressed packet to the network device. A manner in which the network device enables the terminal device to use the Ethernet compression capability is proposed, the compressed Ethernet data can be transmitted between the terminal device and the network device in a wireless network, and a resource waste can be effectively reduced.

By way of example rather than limitation, step S310 may not be required in this embodiment of this application. To be specific, the network device does not need to configure the Ethernet compression capability for the terminal device based on the compression capability information received from the terminal device, but may directly configure the Ethernet compression capability for the terminal device. For example, when the terminal device supports only one Ethernet compression capability, the network device may learn of, by using an uncompressed Ethernet packet sent by the terminal device, the only Ethernet compression capability supported by the terminal device, the terminal device may not need to report the Ethernet compression capability supported by the terminal device, and the network device may send the compression configuration information to the terminal device based on the data performance requirement of the system, to indicate the only Ethernet compression capability supported by the terminal device.

In this embodiment of this application, the network device may be an access network device or a core network device. That the terminal device receives information from the network device (for example, a network device A) in this embodiment of this application may be that the terminal device directly interacts with the network device A to receive the information. In this case, it may be considered that the information is generated by the network device A. Alternatively, that the terminal device receives information from the network device may be that the network device A obtains the information from another network device (for example, denoted as a network device B 1), and then the network device A forwards or transparently transmits the information to the terminal device. In this case, it may be considered that the information is generated by the network device B1 or a network device C1. The network device B1 receives the information from the network device C1. Similarly, that the network device (for example, a network device A) receives information from the terminal device in this embodiment of this application may be that the terminal device directly interacts with the network device A, and the network device A directly receives the information from the terminal device; or may be that the terminal device sends the information to another network device (for example, a network device B 1), and the network device B1 directly sends, or sends through another network device (for example, a network device C1), the information to the network device A.

By way of example rather than limitation, the following describes transmission paths of the compression configuration information and the compression capability information by using examples in which the network device is separately an access network device and a core network device.
1. The network device is an access network device.

A. The access network device generates the compression configuration information.
   The transmission path of the compression configuration information is: the access network device → the terminal device.
B. The access network device obtains the compression configuration information from another device.

A possible transmission path of the compression configuration information is: an AMF network element → a UPF network element → the access network device → the terminal device. In this case, the compression configuration information may be generated by the AMF network element. It may be understood that the access network device receives the compression configuration information from the AMF network element or the UPF network element, and the UPF network element forwards or transparently transmits the compression configuration information generated by the AMF network element to the access network device. Another possible transmission path of the compression configuration information is: an SMF network element → a UPF network element → the access network device → the terminal device. In this case, the compression configuration information may be generated by the SMF network element. It may be understood that the access network device receives the compression configuration information from the SMF network element or the UPF network element, and the UPF network element forwards or transparently transmits the compression configuration information generated by the SMF network element to the access network device. Another possible transmission path of the compression configuration information is: a UPF network element → the access network device → the terminal device. In this case, the compression configuration information may be generated by the UPF network element. It may be understood that the access network device receives the compression configuration information from the UPF network element.

When the network device is an access network device, a possible transmission path of the compression capability information is: the terminal device → the access network device. If a device that generates the compression configuration information is a core network device, the access network device may send the compression capability information to the core network device.

2. The network device is a core network device.

Because there are a relatively large quantity of core network devices, a UPF network element is used as an example, and a case in which the network device is another core network device is similar to a case in which the network device is the UPF network element. For brevity, details are not described herein again. That the terminal device receives information from the network device, and the network device receives information from the terminal device may be understood as that the UPF network element communicates with the terminal device through an access network device, to transmit the information.

A. The UPF network element generates the compression configuration information.

A possible transmission path of the compression configuration information is: the UPF network element → the access network device → the terminal device.

B. The UPF network element obtains the compression configuration information from another device.

A possible transmission path of the compression configuration information is: an AMF network element → the UPF network element → the access network device → the terminal device. Another possible transmission path of the compression configuration information is: an SMF network element → the UPF network element → the access network device → the terminal device.

When the network device is a UPF network element, a possible transmission path of the compression capability information is: the terminal device → the access network device → the UPF network element. Another possible transmission path of the compression capability information is: the terminal device → the access network device → the AMF network element → the SMF network element → the UPF network element.

In various transmission paths of the compression configuration information, the compression configuration information may be transmitted between any two devices by using different signaling. For example, the AMF network element may send the compression configuration information to the UPF network element by using non-access stratum (non-access-stratum, NAS) signaling. The NAS signaling may be a registration response message or a protocol data unit (protocol data unit, PDU) session establishment request/response. For another example, the AMF network element may send the compression configuration information to the terminal device through the access network device by using NAS signaling. For another example, the access network device sends the compression configuration information to the terminal device by using RRC signaling or PDCP control signaling. For another example, the UPF network element may send the compression configuration information to the terminal device through another device by using compression signaling in an Ethernet packet.

It can be learned from the foregoing descriptions that the first Ethernet packet does not include the context information (denoted as first context information for ease of differentiation and understanding). However, to enable the network device to obtain the first context information to decompress the first Ethernet packet, this embodiment of this application provides a possible implementation:

The first Ethernet packet includes a first header, the first header includes a first context identifier, and the first context identifier is used to identify the first context information.

The method further includes:
The network device obtains the first context information based on the first context identifier.

That the network device decompresses the first Ethernet packet includes:
The network device decompresses the first Ethernet packet based on the first context information.

To be specific, the network device obtains the first context identifier from the first header of the first Ethernet packet, and obtains, based on the first context identifier, the context information (namely, the first context information) corresponding to the first context identifier, to decompress the first Ethernet packet based on the first context information. The first context information may be context information in any one of different frame formats that are listed and not listed above. The first context identifier is located in a field (denoted as a field 1 for ease of differentiation and understanding) of the first header, in other words, the field 1 is used to carry the first context identifier.

By way of example rather than limitation, the first header may further include another field, and each field carries corresponding content.

By way of example rather than limitation, the first header further includes at least one of the following fields:
1. a field (denoted as a field 2 for ease of differentiation and understanding) used to indicate whether the first Ethernet packet is compressed, where the field 2 indicates that the first Ethernet packet is compressed;
2. a field (denoted as a field 3 for ease of differentiation and understanding) used to indicate a compression configuration identifier of the frame format of the first Ethernet packet;
3. a field (denoted as a field 4 for ease of differentiation and understanding) used to indicate cyclic redundancy check (cyclic redundancy check, CRC); and
4. a field (denoted as a field 5 for ease of differentiation and understanding) used to indicate whether the header includes one or more of the field 1, the field 2, the field 3, and the field 4. In this way, the terminal device may determine, based on the field 5, a specific field included in the first header, in other words, determine a format of the first header, to read content of each field based on the determined format of the first header.

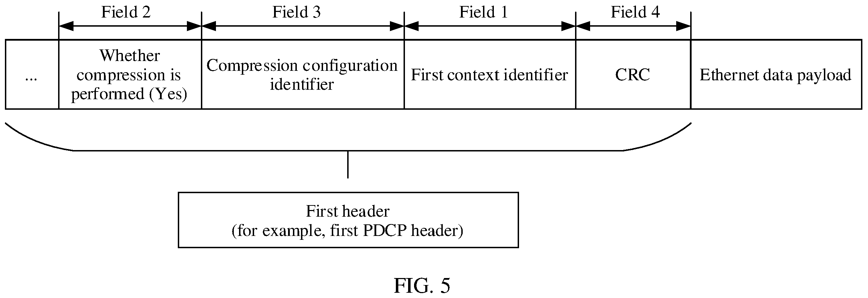

By way of example rather than limitation, FIG. 5 is a schematic diagram of the frame format of the first Ethernet packet according to this embodiment of this application. As shown in FIG. 5, the first Ethernet packet includes a data area and a header (namely, the first header) area. The first header area includes at least four fields, that is, the field 1, the field 2, the field 3, and the field 4. The field 1 carries the first context identifier, the field 2 carries information used to indicate that the first Ethernet packet is compressed, the field 3 carries the compression configuration identifier, and the field 4 carries the CRC.

Therefore, in this embodiment of this application, the context identifier used to identify the context information is added to the header of the Ethernet packet, so that the network device obtains the corresponding context information by using the context identifier, thereby effectively ensuring that the network device successfully decompresses the Ethernet packet.

As described above, the network device may obtain, based on the first context identifier, the context information corresponding to the first context identifier. Specifically, the network device may obtain the first context information from a first correspondence between the first context identifier and the first context information based on the first context identifier. For a manner of obtaining the first correspondence by the network device, this embodiment of this application provides various possible implementations. The following describes specific manners of obtaining the first correspondence by the network device.

### Manner 1

In Manner 1, the network device obtains the first correspondence from the terminal device. In other words, the terminal device generates the first correspondence, and sends the first correspondence to the network device.

The terminal device may send the first correspondence before or after generating the first Ethernet packet, as long as the first correspondence is sent to the network device before the network device decompresses the first Ethernet packet.

In a possible implementation, the terminal device sends a correspondence between a context identifier and context information to the network device, where the correspondence includes the first correspondence. The correspondence is a correspondence between at least one context identifier and at least one piece of context information, and each context identifier corresponds to one piece of context information.

The following uses the first correspondence as an example to describe a manner of sending the correspondence by the terminal device.

In a possible implementation, the terminal device may send the first correspondence to the network device by using signaling in various forms, for example, radio resource control (radio resource control, RRC) signaling, non-access stratum (non-access-stratum, NAS) signaling, or application-layer signaling used for Ethernet header compression.

In this manner, in addition to the first correspondence, another correspondence in the correspondence may also be carried in the signaling, or may be carried in other signaling. This is not limited in this embodiment of this application.

In an actual industrial scenario, one network device may correspond to a plurality of terminal devices. This means that one destination MAC address may correspond to a plurality of source MAC addresses. Usually, both the destination MAC address and the source MAC address are content in the context information. Therefore, for a same frame format, even if compressed fields in the frame format are the same, source MAC addresses and/or destination MAC addresses are different. For example, one network device corresponds to two terminal devices (a terminal device A and a terminal device B). There are two pieces of context information for a same frame format. One piece of context information includes MAC addresses of the network device and the terminal device A, and the other piece of context information includes MAC addresses of the network device and the terminal device B. In addition, when a context identifier is configured for context information, for all pieces of context information, one context identifier may be configured for one piece of context information, and any two context identifiers are different. However, this causes a relatively large quantity of occupied bits. To reduce the quantity of bits, context identifiers in one frame format may be generated. For example, if a frame format 1 corresponds to two context identifiers, and a frame format 2 corresponds to two context identifiers, the two context identifiers in the frame format 1 may be 0 and 1, and the two context identifiers in the frame format 2 may also be 0 and 1.

Therefore, to reduce the quantity of bits occupied by the context identifier, a plurality of pieces of context information for each frame format may be generated. The first correspondence is used as an example. In a possible implementation, the terminal device sends, to the network device, information used to indicate the frame format (namely, the first frame format) corresponding to the first correspondence. In this way, the network device may learn that the first correspondence is a correspondence for the first frame format, and store the context identifier that occupies a relatively small quantity of bits.

The first frame format and the first correspondence may be carried in same information, or may be carried in different information. This is not limited in this embodiment of this application.

From the perspective of reducing signaling, when sending an uncompressed Ethernet packet, the terminal device may alternatively include a correspondence in a header of the uncompressed Ethernet packet, where the correspondence indicates context information in a frame format of the uncompressed Ethernet packet and a corresponding context identifier, so that the network device may obtain the correspondence from the uncompressed Ethernet packet and store the correspondence. In this way, if the terminal device subsequently sends a compressed Ethernet packet whose frame format is the same as that of the uncompressed Ethernet packet, the network device may directly obtain context information of the compressed Ethernet packet based on the pre-stored correspondence, to successfully decompress the Ethernet packet.

Therefore, for the first correspondence, in another possible implementation, the terminal device sends a second Ethernet packet to the network device, where the second Ethernet packet includes a second header, and the second header includes the first correspondence.

In this manner, in addition to the first correspondence, another correspondence in the correspondence may also be carried in an uncompressed Ethernet packet.

Similarly, to reduce a quantity of bits occupied by the context identifier, in a possible implementation, the second header further includes a frame format of the second Ethernet packet, and the frame format of the second Ethernet packet is the same as the frame format (namely, the first frame format) of the first Ethernet packet.

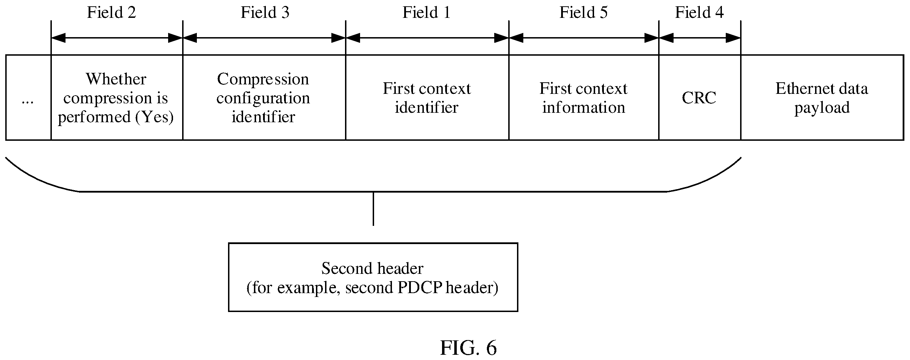

By way of example rather than limitation, FIG. 6 is a schematic diagram of the frame format of the second Ethernet packet according to this embodiment of this application. As shown in FIG. 6, the frame format of the second Ethernet packet is a frame format of an uncompressed packet, and the second Ethernet packet includes a data area and a header (namely, the second header) area. The second header area includes at least a field 1 and a field 5. The field 1 carries the first context identifier, and the field 5 carries the first context information. Optionally, the second header may further include at least one of a field 2, a field 3, or a field 4. The field 2 carries information used to indicate that the second Ethernet packet is not compressed, the field 3 carries a compression configuration identifier used to indicate the frame format of the second Ethernet packet, and the field 4 carries a CRC.

In Manner 1, the network device and the terminal device need to jointly maintain the correspondence between a context identifier and context information. Considering a buffer capability of the terminal device, to prevent the correspondence generated by the terminal device from exceeding the buffer capability of the terminal device, this embodiment of this application further provides a possible implementation:
The network device sends first indication information to the terminal device, where the first indication information is used to indicate a maximum quantity of pieces of context information to be generated by the terminal device.

### Manner 2

The network device obtains the first correspondence from a pre-stored correspondence between at least one piece of context information and at least one context identifier based on the first context identifier, where each piece of context information corresponds to one context identifier.

In Manner 2, the pre-stored correspondence may be specified in the system or a protocol, or may be generated by the network device in advance. It may be understood in this way: In the system or the protocol, M pieces of context information may be configured for different compressible frame formats, or the network device may generate M pieces of context information based on different compressible frame formats. In addition, to facilitate query and identification, one corresponding context identifier is configured for each piece of context information.

The foregoing describes the correspondence in detail in this embodiment of this application. The following describes a feedback for related information in this embodiment of this application.

In this embodiment of this application, related feedback modes are separately set for whether the network device successfully receives the first correspondence and whether the network device successfully decompresses the first Ethernet packet.

In a possible implementation, the method further includes:
The terminal device receives feedback mode information, where the feedback mode information includes any one of the following: an acknowledgment (acknowledgment, ACK) feedback mode, a negative acknowledgment (negative acknowledgment, NACK) feedback mode, or a no-feedback mode.

The foregoing three feedback modes are described by using a receiving status of the network device for the first correspondence as an example.

The ACK feedback mode indicates that if the network device successfully receives the first correspondence, the network device sends feedback information to the terminal device; on the contrary, if the network device fails to receive the first correspondence, the network device does not send the feedback information. If not receiving the feedback information within preset duration, the terminal device considers that the network device fails to receive the first correspondence.

The NACK feedback mode indicates that if the network device fails to receive the first correspondence, the network device sends feedback information to the terminal device; on the contrary, if the network device successfully receives the first correspondence, the network device does not send the feedback information. If not receiving the feedback information within preset duration, the terminal device considers that the network device successfully receives the first correspondence.

The no-feedback mode indicates that after sending the first correspondence, the terminal device ignores whether the network device successfully receives the first correspondence, and does not need to receive feedback information sent by the network device.

Similarly, the foregoing three feedback modes are described by using a decompression status of the network device for the first Ethernet packet as an example.

The ACK feedback mode indicates that if the network device successfully decompresses the first Ethernet packet, the network device sends feedback information to the terminal device; on the contrary, if the network device fails to decompress the first Ethernet packet, the network device does not send the feedback information. If not receiving the feedback information within preset duration, the terminal device considers that the network device fails to decompress the first Ethernet packet.

The NACK feedback mode indicates that if the network device fails to decompress the first Ethernet packet, the network device sends feedback information to the terminal device; on the contrary, if the network device successfully decompresses the first Ethernet packet, the network device does not send the feedback information. If not receiving the feedback information within preset duration, the terminal device considers that the network device successfully decompresses the first Ethernet packet.

The no-feedback mode indicates that after sending the first Ethernet packet, the terminal device ignores whether the network device successfully decompresses the first Ethernet packet, and does not need to receive feedback information sent by the network device.

For the no-feedback mode, optionally, the terminal device may receive another parameter, for example, N and M, about the no-feedback mode from configuration information of the network device. N represents a quantity of times of enabling a compression mode by a transmit end (for example, the terminal device) for sending an uncompressed packet, and M represents duration in which the transmit end (for example, the terminal device) can send a compressed packet after enabling the compression mode. Before a timer expires, the compression mode is used for sending, and after the timer expires, the context information is reset.

Separately from the perspectives of the receiving status of the network device for the first correspondence and the decompression status of the network device for the first Ethernet packet, the following uses the ACK feedback mode as an example to describe a process of sending the feedback information by the network device.

### Receiving status of the network device for the first correspondence

In a possible implementation, the method further includes:
The network device sends first feedback information to the terminal device, where the first feedback information is used to indicate that the network device successfully receives the first correspondence.

By way of example rather than limitation, the first feedback information may include at least one of the following content: the first context identifier or ACK information.

In a possible implementation, if the first correspondence is carried in the second header of the second Ethernet packet, the first feedback information may further include a sequence number of the second Ethernet packet. In this manner, that the network device successfully receives the first correspondence can also be indicated.

In this embodiment of this application, a packet used to carry feedback information may be independently designed. The first feedback information is carried in a payload area of the packet sent by the network device.

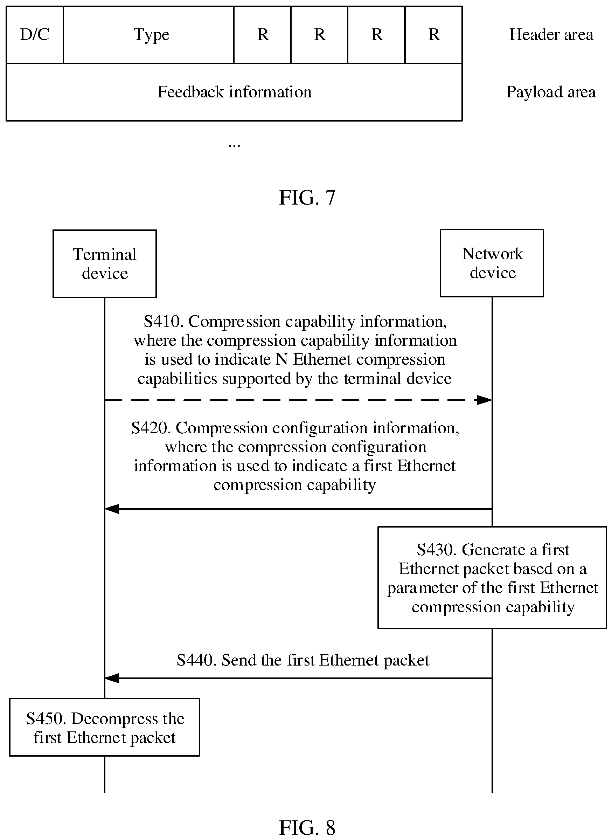

FIG. 7 is a schematic diagram of a frame format of the packet used to carry the feedback information according to this embodiment of this application. As shown in FIG. 7, the packet includes a header area and a payload area. The header may include at least: a field, namely, a D/C field, used to indicate whether the packet is a packet of a data type or a packet of a control information type, where D represents data, and C represents control information; a type field, where for example, the type field may be a field used to indicate feedback information for Ethernet compression; and R fields, representing reserved fields. The payload area is an area carrying the feedback information (for example, the first feedback information).

### Decompression status of the network device for the first Ethernet packet

In a possible implementation, the method further includes:
The network device sends second feedback information to the terminal device, where the second feedback information is used to indicate that the network device successfully decompresses the first Ethernet packet.

By way of example rather than limitation, the second feedback information may include at least one of the following content: a sequence number of the first Ethernet packet or ACK information.

In this embodiment of this application, a packet used to carry feedback information may be independently designed. The second feedback information is carried in a payload area of the packet sent by the network device. For a frame format of the packet used to carry the feedback information, refer to the descriptions in FIG. 7. For brevity, details are not described herein again.

In this embodiment of this application, in a possible implementation, the terminal device may send, to the network device, indication information used to indicate to reset the context. The indication information is used to indicate the network device to delete the context information stored in the network device. This may also be understood as that the terminal device and the network device need to renegotiate for compression of the context information.

It should be noted that the steps in this embodiment of this application may be implemented on one functional entity, or may be implemented on a plurality of entities. The entity (entity) is a logical entity, and is implemented in a form of a logical instance. Specifically, a function of the entity is implemented by using software. It is assumed that this embodiment of this application may include a PDCP entity and a compression/decompression entity. In a possible implementation, S310 and/or S320 may be implemented on the PDCP entity, and S330 and/or S350 may be implemented on the compression/decompression entity. After the PDCP entity performs S310 and/or S320, the compression/decompression entity is enabled, to generate an Ethernet packet, and the Ethernet packet is sent to a compression/decompression entity of the network device, so that the network device performs a decompression function. In another possible implementation, this embodiment of this application may be completely implemented on the PDCP entity. In another possible implementation, this embodiment of this application is completely implemented on the compression/decompression entity.

The foregoing describes, from the perspective of uplink transmission, the process of compressing the Ethernet data in the embodiments of this application. The following continues to describe, from the perspective of downlink transmission, the process of compressing the Ethernet data in the embodiments of this application. In the following embodiment, "third" and "fourth" are used to distinguish from the parameter of the Ethernet compression capability, the Ethernet packet, and the like in the foregoing embodiment. The terms such as "first", "second", "third", and "fourth" are not intended to limit a sequence of objects indicated by the terms, and in terms of the downlink transmission, "third" and "fourth" herein may be replaced with "first" and "second".

FIG. 8 is a schematic interaction diagram of a communication method 400 for Ethernet data according to an embodiment of this application.

In this embodiment, a terminal device reports an Ethernet compression capability of the terminal device to a network device, the network device configures one or more Ethernet compression capabilities for the terminal device based on the Ethernet compression capability of the terminal device, and the network device compresses Ethernet data based on the configured Ethernet compression capability, and sends a compressed packet to the terminal device.

The following describes steps of the method 400.

S410: The terminal device sends compression capability information to the network device, where the compression capability information is used to indicate N Ethernet compression capabilities supported by the terminal device, where N is an integer greater than or equal to 1.

For descriptions of S410, refer to the descriptions of S310 in the method 300. For brevity, details are not described herein again.

S420: The network device sends compression configuration information to the terminal device, where the compression configuration information is used to indicate a parameter of a third Ethernet compression capability, and the N Ethernet compression capabilities include the third Ethernet compression capability.

Herein, the compression configuration information may be understood as information used by the network device to enable the Ethernet compression capability for the terminal device. A slight difference of a function of the compression configuration information from the specific function of the compression configuration information in uplink transmission lies in that after receiving the compression configuration information, the terminal device enables the Ethernet compression capability, learns that the network device is to subsequently send a compressed Ethernet packet, and learns of a specific Ethernet compression capability to be used to compress the Ethernet packet, so that the terminal device can decompress compressed Ethernet data sent by the network device.

It should be emphasized herein that, that the terminal device enables the Ethernet compression capability indicates that the terminal device can decompress the received compressed Ethernet data. In actual processing, a functional entity may further be configured for a compression/decompression function. The terminal device may directly decompress the received Ethernet packet through a decompression functional entity based on the compression configuration information.

The following briefly describes the parameter of the third Ethernet compression capability.

In a possible implementation, the parameter of the third Ethernet compression capability includes an enabling parameter, and the enabling parameter is used to indicate the terminal device to use the third Ethernet compression capability.

For descriptions of the enabling parameter, refer to the descriptions of the enabling parameter in S320 in the method 300.

In a possible implementation, the parameter of the third Ethernet compression capability includes a frame format parameter used to indicate a third frame format, and the third frame format is a frame format of a third Ethernet packet.

In this way, the terminal device may learn, based on the frame format parameter, that the network device can compress Ethernet data generated based on the third frame format.

Certainly, the parameter of the third Ethernet compression capability may not include the enabling parameter, and the terminal device and the network device may negotiate that the frame format parameter in the compression configuration information indicates a frame format that can be compressed by the network device. In this way, the terminal device may determine, by using only the frame format parameter, that the terminal device can decompress the Ethernet data generated based on the third frame format.

In a possible implementation, the parameter of the third Ethernet compression capability further includes an algorithm parameter used to indicate a compression algorithm of the third frame format.

For descriptions of the algorithm parameter, refer to the descriptions of the algorithm parameter in the uplink transmission. For brevity, details are not described herein again.

It should be emphasized that for the downlink transmission, in a possible configuration manner of indicating the compression algorithm, configuration information received by the terminal device indicates a field, in the third frame format, whose content has been removed.

S430: The network device generates the third Ethernet packet based on the parameter of the third Ethernet compression capability.

That is, the network device compresses the Ethernet data by using the parameter of the third Ethernet compression capability, to be specific, the network device removes context information of the Ethernet packet, to generate the compressed third Ethernet packet.

It should be understood that similar to the first Ethernet packet in the uplink transmission, the third Ethernet packet in the downlink transmission may be a PDCP layer Ethernet packet, or may be an Ethernet packet at another protocol layer. This is not limited in this embodiment of this application.

S440: The network device sends the third Ethernet packet to the terminal device.

S450: The terminal device decompresses the third Ethernet packet.

To be specific, the terminal device needs to restore the third Ethernet packet to the uncompressed packet. In other words, the terminal device needs to add, to the third Ethernet packet, the context information removed by the network device, to restore a header area of the third Ethernet packet, thereby completing decompression of the third Ethernet packet.

Therefore, according to the communication method for Ethernet data that is provided in this embodiment of this application, the terminal device reports the Ethernet compression capability of the terminal device to the network device; the network device configures one or more Ethernet compression capabilities for the terminal device based on the Ethernet compression capability of the terminal device, so that the terminal device enables the decompression function for the Ethernet packet; and the network device sends the compressed packet to the terminal device. A manner in which the network device enables the terminal device to use the Ethernet compression capability is proposed, the compressed Ethernet data can be transmitted between the terminal device and the network device in a wireless network, and signaling overheads can be effectively reduced.

To enable the terminal device to obtain the context information to decompress the third Ethernet packet, this embodiment of this application provides a possible implementation: The third Ethernet packet includes a third header, the third header includes a third context identifier, and the third context identifier is used to identify third context information.

The method further includes:
The terminal device obtains the third context information based on the third context identifier.

That the terminal device decompresses the third Ethernet packet includes:
The terminal device decompresses the third Ethernet packet based on the third context information.

To be specific, the terminal device obtains the third context identifier from the third header of the third Ethernet packet, and obtains, based on the third context identifier, the context information (namely, the third context information) corresponding to the third context identifier, to decompress the third Ethernet packet based on the third context information. The third context information may be context information in any one of different frame formats that are listed and not listed above.

For descriptions of the third header of the third Ethernet packet in the downlink transmission, refer to the descriptions of the first header of the first Ethernet packet in the uplink transmission. For brevity, details are not described herein again.

Therefore, in this embodiment of this application, the context identifier used to identify the context information is added to the header of the Ethernet packet, so that the terminal device obtains the corresponding context information by using the context identifier, thereby effectively ensuring that the terminal device successfully decompresses the Ethernet packet.

As described above, the terminal device may obtain, based on the third context identifier, the context information corresponding to the third context identifier. Specifically, the terminal device may obtain the third context information from a third correspondence between the third context identifier and the third context information based on the third context identifier. For a manner of obtaining the third correspondence by the terminal device, this embodiment of this application provides various possible implementations. The following briefly describes specific manners of obtaining the third correspondence by the terminal device.

### Manner 3

In Manner 3, the terminal device obtains the third correspondence from the network device. In other words, the network device generates the third correspondence, and sends the third correspondence to the terminal device.

In a possible implementation, the network device sends a correspondence between a context identifier and context information to the terminal device, where the correspondence includes the third correspondence. The correspondence is a correspondence between at least one context identifier and at least one piece of context information, and each context identifier corresponds to one piece of context information.

The following uses the third correspondence as an example to describe a manner of sending the correspondence by the network device.

In a possible implementation, the network device may send the third correspondence to the terminal device by using signaling in various forms, for example, radio resource control (radio resource control, RRC) signaling.

To reduce a quantity of bits occupied by the context identifier, a plurality of pieces of context information for each frame format may be generated. The third correspondence is used as an example. In a possible implementation, the network device sends, to the terminal device, information used to indicate the frame format (namely, the third frame format) corresponding to the third correspondence. In this way, the terminal device may learn that the third correspondence is a correspondence for the third frame format, and store the context identifier that occupies a relatively small quantity of bits.

The third frame format and the third correspondence may be carried in same information, or may be carried in different information. This is not limited in this embodiment of this application.

From the perspective of reducing signaling, when sending an uncompressed Ethernet packet, the network device may alternatively include a correspondence in a header of the uncompressed Ethernet packet, where the correspondence indicates context information in a frame format of the uncompressed Ethernet packet and a corresponding context identifier, so that the terminal device may obtain the correspondence from the uncompressed Ethernet packet and store the correspondence. In this way, if the network device subsequently sends a compressed Ethernet packet whose frame format is the same as that of the uncompressed Ethernet packet, the terminal device may directly obtain context information of the compressed Ethernet packet based on the pre-stored correspondence, to successfully decompress the Ethernet packet.

Therefore, for the third correspondence, in another possible implementation, the network device sends a fourth Ethernet packet to the terminal device, where the fourth Ethernet packet includes a fourth header, and the fourth header includes the third correspondence.

In this manner, in addition to the third correspondence, another correspondence in the correspondence may also be carried in an uncompressed Ethernet packet.

Similarly, to reduce a quantity of bits occupied by the context identifier, in a possible implementation, the fourth header further includes a frame format of the fourth Ethernet packet, and the frame format of the fourth Ethernet packet is the same as the frame format (namely, the third frame format) of the third Ethernet packet.

For descriptions of the fourth header of the fourth Ethernet packet in the downlink transmission, refer to the descriptions of the second header of the second Ethernet packet in the uplink transmission in the method 300. For brevity, details are not described herein again.

In Manner 3, the network device and the terminal device need to jointly maintain the correspondence between a context identifier and context information. Considering a buffer capability of the terminal device, to prevent the correspondence generated by the terminal device from exceeding the buffer capability of the terminal device, this embodiment of this application further provides a possible implementation:
The network device sends first indication information to the terminal device, where the first indication information is used to indicate a maximum quantity of pieces of context information to be generated by the terminal device.

### Manner 4

The terminal device obtains the third correspondence from a pre-stored correspondence between at least one piece of context information and at least one context identifier based on the third context identifier, where each piece of context information corresponds to one context identifier.

In Manner 4, the pre-stored correspondence may be specified in a system or a protocol, or may be generated by the terminal device in advance. It may be understood in this way: In the system or the protocol, M pieces of context information may be configured for different compressible frame formats, or the terminal device may generate M pieces of context information based on different compressible frame formats. In addition, to facilitate query and identification, one corresponding context identifier is configured for each piece of context information.

The foregoing describes the correspondence in detail in this embodiment of this application. The following describes a feedback for related information in this embodiment of this application.

In this embodiment of this application, related feedback modes are separately set for whether the terminal device successfully receives the third correspondence and whether the terminal device successfully decompresses the third Ethernet packet.

In a possible implementation, the method further includes:
The network device sends feedback mode information, where the feedback mode information includes any one of the following: an acknowledgment (acknowledgment, ACK) feedback mode, a negative acknowledgment (negative acknowledgment, NACK) feedback mode, or a no-feedback mode.

By way of example rather than limitation, the feedback mode information may be configuration information sent by the network device.

The foregoing three feedback modes are described by using a receiving status of the terminal device for the third correspondence as an example.

The ACK feedback mode indicates that if the terminal device successfully receives the third correspondence, the terminal device sends feedback information to the network device; on the contrary, if the terminal device fails to receive the third correspondence, the terminal device does not send the feedback information. If not receiving the feedback information within preset duration, the network device considers that the terminal device fails to receive the third correspondence.

The NACK feedback mode indicates that if the terminal device fails to receive the third correspondence, the terminal device sends feedback information to the network device; on the contrary, if the terminal device successfully receives the third correspondence, the terminal device does not send the feedback information. If not receiving the feedback information within preset duration, the network device considers that the terminal device successfully receives the third correspondence.

The no-feedback mode indicates that after sending the third correspondence, the network device ignores whether the terminal device successfully receives the third correspondence, and does not need to receive feedback information sent by the terminal device.

For the no-feedback mode, optionally, the terminal device may receive another parameter, for example, N and M, about the no-feedback mode from configuration information of the network device. N represents a quantity of times of enabling a compression mode by a transmit end (for example, the network device) for sending an uncompressed packet, and M represents duration in which the transmit end (for example, the network device) can send a compressed packet after enabling the compression mode. Before a timer expires, the compression mode is used for sending, and after the timer expires, the context information is reset.

Similarly, the foregoing three feedback modes are described by using a decompression status of the terminal device for the third Ethernet packet as an example.

The ACK feedback mode indicates that if the terminal device successfully decompresses the third Ethernet packet, the terminal device sends feedback information to the network device; on the contrary, if the terminal device fails to decompress the third Ethernet packet, the terminal device does not send the feedback information. If not receiving the feedback information within preset duration, the network device considers that the terminal device fails to decompress the third Ethernet packet.

The NACK feedback mode indicates that if the terminal device fails to decompress the third Ethernet packet, the terminal device sends feedback information to the network device; on the contrary, if the terminal device successfully decompresses the third Ethernet packet, the terminal device does not send the feedback information. If not receiving the feedback information within preset duration, the network device considers that the terminal device successfully decompresses the third Ethernet packet.

The no-feedback mode indicates that after sending the third Ethernet packet, the network device ignores whether the terminal device successfully decompresses the third Ethernet packet, and does not need to receive feedback information sent by the terminal device.

Separately from the perspectives of the receiving status of the terminal device for the third correspondence and the decompression status of the terminal device for the third Ethernet packet the following uses the ACK feedback mode as an example to describe a process of sending the feedback information by the terminal device.

Receiving status of the terminal device for the third correspondence

In a possible implementation, the method further includes:
The terminal device sends third feedback information to the network device, where the third feedback information is used to indicate that the terminal device successfully receives the third correspondence.

By way of example rather than limitation, the third feedback information may include at least one of the following content: the third context identifier or ACK information.

In a possible implementation, if the third correspondence is carried in the fourth header of the fourth Ethernet packet, the third feedback information may further include a sequence number of the fourth Ethernet packet. In this manner, that the terminal device successfully receives the third correspondence can also be indicated.

In this embodiment of this application, a packet used to carry feedback information may be independently designed. The third feedback information is carried in a payload area of the packet sent by the terminal device. For descriptions of a frame format of the packet used to carry the feedback information, refer to the foregoing descriptions in FIG. 7. For brevity, details are not described herein again.

Decompression status of the terminal device for the third Ethernet packet

In a possible implementation, the method further includes:
The terminal device sends fourth feedback information to the network device, where the fourth feedback information is used to indicate that the terminal device successfully decompresses the third Ethernet packet.

By way of example rather than limitation, the fourth feedback information may include at least one of the following content: a sequence number of the third Ethernet packet or ACK information.

In this embodiment of this application, a packet used to carry feedback information may be independently designed. The fourth feedback information is carried in a payload area of the packet sent by the terminal device. For a frame format of the packet used to carry the feedback information, refer to the descriptions in FIG. 7. For brevity, details are not described herein again.

A similarity to the uplink transmission lies in that the steps in this embodiment of this application may be implemented on one functional entity, or may be implemented on a plurality of entities. The entity (entity) is a logical entity, and is implemented in a form of a logical instance. Specifically, a function of the entity is implemented by using software. It is assumed that this embodiment of this application may include a PDCP entity and a compression/decompression entity. In a possible implementation, S410 and/or S420 may be implemented on the PDCP entity, and S430 and/or S450 may be implemented on the compression/decompression entity. After the PDCP entity performs S410 and/or S420, the compression/decompression entity is enabled, to generate an Ethernet packet, and the Ethernet packet is sent to a compression/decompression entity of the terminal device, so that the terminal device performs a decompression function. In another possible implementation, this embodiment of this application may be completely implemented on the PDCP entity. In another possible implementation, this embodiment of this application is completely implemented on the compression/decompression entity.

The foregoing describes, separately from the perspectives of uplink transmission and downlink transmission, the process of compressing the Ethernet data in the embodiments of this application. The following continues to describe, from the perspectives of a receive end and a transmit end and the perspective of downlink transmission, the process of compressing the Ethernet data in the embodiments of this application.

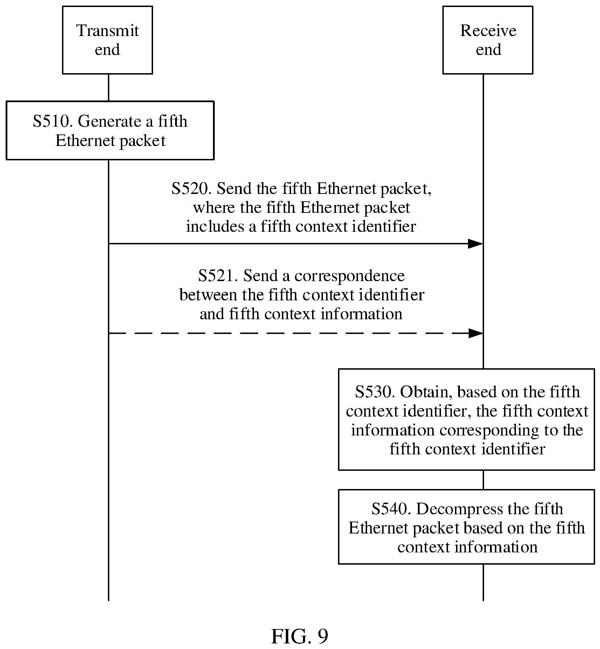

FIG. 9 is a schematic interaction diagram of a communication method 500 for Ethernet data according to an embodiment of this application.

In the method, a receive end may be a terminal device, and a transmit end may be a network device. Alternatively, a receive end is a network device, and a transmit end is a terminal device.

S510: The transmit end generates a fifth Ethernet packet, where the fifth Ethernet packet includes a fifth header, the fifth header includes a fifth context identifier, and the fifth context identifier is used to identify fifth context information.

S520: The transmit end sends the fifth Ethernet packet to the receive end.

S530: The receive end obtains the fifth context information based on the fifth context identifier.

S540: The receive end decompresses the fifth Ethernet packet based on the fifth context information.

Therefore, according to the communication method for Ethernet data in this embodiment of this application, the transmit end sends a compressed Ethernet packet (for example, the fifth Ethernet packet) to the receive end, so that a resource waste can be effectively reduced. In addition, the context identifier used to identify the context information is added to the header of the Ethernet packet, so that the receive end can obtain the corresponding context information by using the context identifier, thereby effectively ensuring a probability of successfully decompressing the Ethernet packet by the receive end.

Optionally, the transmit end sends a correspondence between a context identifier and context information to the receive end, where the correspondence includes a fifth correspondence between the fifth context identifier and the fifth context information.

Optionally, the transmit end sends a sixth Ethernet packet to the receive end, where the sixth Ethernet packet includes a sixth header, and the sixth header includes a correspondence between the fifth context identifier and the fifth context information.

Therefore, the correspondence is carried in an uncompressed Ethernet packet (for example, the sixth Ethernet packet), so that signaling overheads can be reduced, and resources can be saved.

Optionally, the sixth header further includes indication information used to indicate a type of a frame format of the sixth Ethernet packet, and the type of the frame format of the sixth Ethernet packet is the same as a type of a frame format of the fifth Ethernet packet.

Therefore, the frame format is carried in the uncompressed Ethernet packet (for example, the sixth Ethernet packet), so that a system can establish at least one context identifier for each frame format. Context information is identified in each frame format, so that a quantity of bits occupied by the context identifier can be reduced.

Optionally, the method further includes:
The receive end sends fifth feedback information to the transmit end, where the fifth feedback information is used to indicate that the receive end successfully receives the correspondence.

Optionally, the fifth feedback information includes the context identifier in the correspondence.

The fifth feedback information includes the fifth context identifier in the fifth correspondence.

Optionally, the method further includes:
The receive end sends sixth feedback information to the transmit end, where the sixth feedback information is used to indicate that the receive end successfully decompresses the fifth Ethernet packet.

Optionally, the transmit end is a terminal device, and the receive end is a network device; and the method further includes:

The transmit end sends compression capability information to the receive end, where the compression capability information is used to indicate N Ethernet compression capabilities supported by the transmit end, where N is an integer greater than or equal to 1.

The receive end sends compression configuration information to the transmit end, where the compression configuration information is used to indicate a parameter of a fifth Ethernet compression capability, and the N Ethernet compression capabilities include the fifth Ethernet compression capability.

That the transmit end generates a fifth Ethernet packet includes:
The transmit end generates the fifth Ethernet packet based on the parameter of the fifth Ethernet compression capability.

Optionally, the transmit end is a network device, and the receive end is a terminal device; and the method further includes:
The receive end sends compression capability information to the transmit end, where the compression capability information is used to indicate N Ethernet compression capabilities supported by the receive end, where N is an integer greater than or equal to 1.

The transmit end sends compression configuration information to the receive end, where the compression configuration information is used to indicate a parameter of a fifth Ethernet compression capability, and the N Ethernet compression capabilities include the fifth Ethernet compression capability.

That the transmit end generates a fifth Ethernet packet includes:
The transmit end generates the fifth Ethernet packet based on the parameter of the fifth Ethernet compression capability.

In uplink transmission, the receive end is a network device, and the transmit end is a terminal device. For the method in this embodiment of this application, refer to the method 300. For brevity, details are not described herein again. The fifth Ethernet packet in the method 500 may correspond to the first Ethernet packet in the method 300, the fifth header in the method 500 may correspond to the first header in the method 300, the fifth context identifier in the method 500 may correspond to the first context identifier in the method 300, the fifth context information in the method 500 may correspond to the first context information in the method 300, the fifth correspondence in the method 500 may correspond to the first correspondence in the method 300, the sixth Ethernet packet in the method 500 may correspond to the second Ethernet packet in the method 300, the sixth header in the method 500 may correspond to the second header in the method 300, the fifth feedback information in the method 500 may correspond to the first feedback information in the method 300, and the sixth feedback information in the method 500 may correspond to the second feedback information in the method 300.

In downlink transmission, the receive end may be a terminal device, and the transmit end may be a network device. For the method in this embodiment of this application, refer to the method 400. For brevity, details are not described herein again. The fifth Ethernet packet in the method 500 may correspond to the third Ethernet packet in the method 400, the fifth header in the method 500 may correspond to the third header in the method 400, the fifth context identifier in the method 500 may correspond to the third context identifier in the method 400, the fifth context information in the method 500 may correspond to the third context information in the method 400, the fifth correspondence in the method 500 may correspond to the third correspondence in the method 400, the sixth Ethernet packet in the method 500 may correspond to the fourth Ethernet packet in the method 400, the sixth header in the method 500 may correspond to the fourth header in the method 400, the fifth feedback information in the method 500 may correspond to the third feedback information in the method 400, and the sixth feedback information in the method 500 may correspond to the fourth feedback information in the method 400.

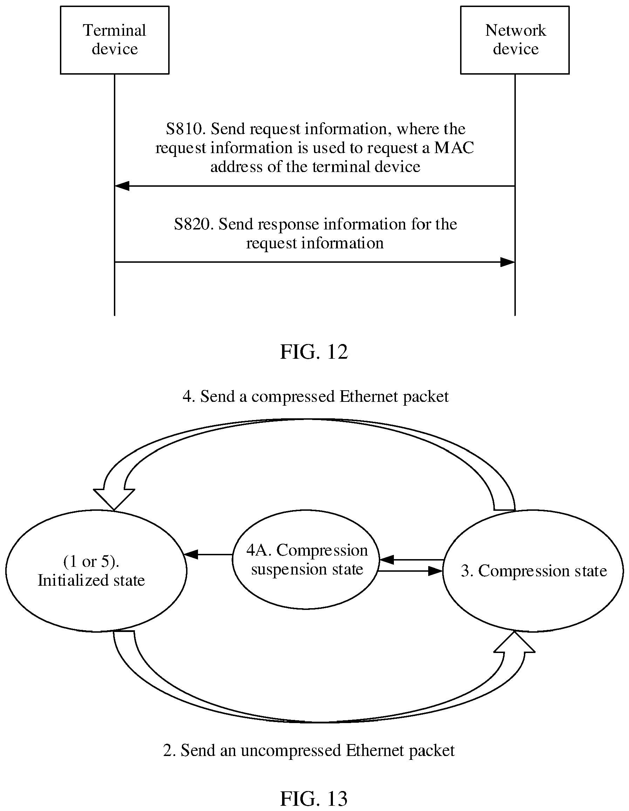

The following describes behavior conversion between sending of a compressed packet and sending of an uncompressed packet in this embodiment of this application from the perspectives of the receive end and the transmit end with reference to FIG. 13 showing transition of an Ethernet compression state.
1. The transmit end is in an initialized state, and the initialized state indicates that a related Ethernet compression/decompression function has been configured for the transmit end.

Optionally, before the transmit end enables compression, the receive end may send an Ethernet compression initialization indication. After receiving the indication, the transmit end starts to prepare the Ethernet compression/decompression function. For example, an initialization indication is added to Ethernet compression signaling, MAC signaling, RRC signaling, NAS signaling, or a subheader of a PDCP PDU. It may be understood that an Ethernet packet to be subsequently received by the receive end needs to be processed by using the decompression function. The Ethernet packet sent by the transmit end needs to be processed by using the compression function.

2. By way of example rather than limitation, the transmit end sends an uncompressed Ethernet packet when any one of the following events occurs, where the uncompressed Ethernet packet may carry context information that needs to be stored by the receive end.

Optionally, the transmit end has not established the context information.

Optionally, the transmit end and the receive end are in an out-of-synchronization state.

3. By way of example rather than limitation, the transmit end transits from the initialized state to a compression state when any one of the following events occurs:
Optionally, before the transmit end enables compression, the receive end may send an Ethernet compression enabling indication. After receiving the indication information, the transmit end enables the Ethernet compression/decompression function. For example, an enabling indication is added to Ethernet compression signaling, MAC signaling, RRC signaling, NAS signaling, or a subheader of a PDCP PDU. It may be understood that an Ethernet packet to be subsequently received by the receive end needs to be processed by using the decompression function. The Ethernet packet sent by the transmit end needs to be processed by using the compression function.

4. After determining to send a compressed Ethernet packet, the transmit end sends the compressed Ethernet packet.

4A. Compression suspension state

In this process, optionally, the receive end may send an Ethernet compression suspension indication, and after receiving the indication, the transmit end suspends an Ethernet compression behavior. For example, an Ethernet compression suspension indication is added to Ethernet compression signaling, MAC signaling, RRC signaling, NAS signaling, or a subheader of a PDCP PDU.

Optionally, the receive end may send an Ethernet compression restoration indication, and after receiving the indication, the transmit end restores the Ethernet compression behavior. For example, an Ethernet compression restoration indication is added to Ethernet compression signaling, MAC signaling, RRC signaling, NAS signaling, or a subheader of a PDCP PDU.

Optionally, if not receiving the Ethernet compression restoration indication, the transmit end transits from the compression suspension state to the initialized state.

5. The transmit end transits from the compression state to the initialized state when any one of the following events occurs:
Optionally, after receiving an Ethernet compression buffer reset indication, the transmit end resets context information in an Ethernet compression buffer. For example, an Ethernet compression buffer reset indication is added to Ethernet compression signaling, MAC signaling, RRC signaling, NAS signaling, or a subheader of a PDCP PDU. For example, the Ethernet compression buffer reset indication is used to re-synchronize contexts of the receive end and the transmit end during handover of the terminal.

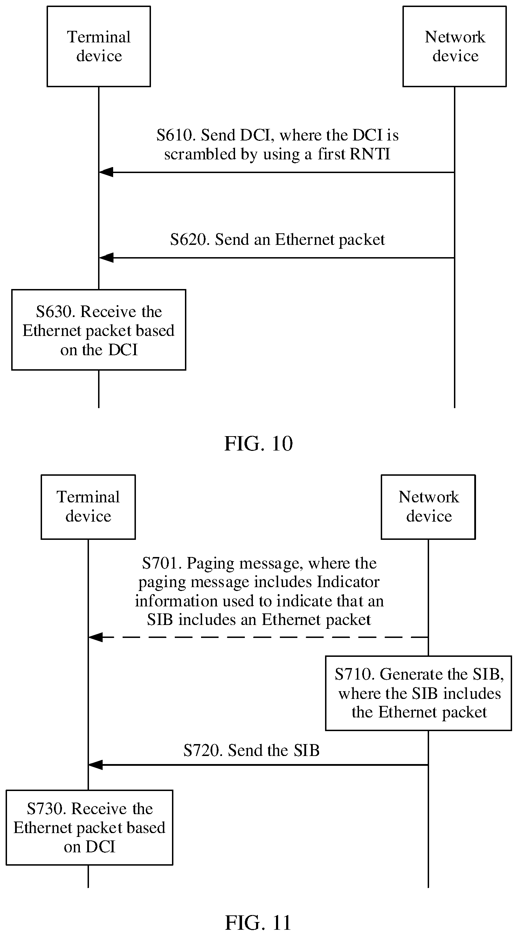

The foregoing describes the embodiment in the first aspect in detail with reference to FIG. 3 to FIG. 9. The following describes the embodiment in the second aspect in the embodiments of this application in detail with reference to FIG. 10 and FIG. 11.

As described above, the second aspect describes a solution about how to transmit a broadcast-type or groupcast-type Ethernet packet. The embodiments of this application provide two manners (namely, Manner A and Manner B) of transmitting the broadcast-type or groupcast-type Ethernet packet. In Manner A, an RNTI for the broadcast-type or groupcast-type Ethernet packet is proposed, and the network device sends the broadcast-type Ethernet packet based on the RNTI. In Manner B, sending the broadcast-type Ethernet packet in a system information block (system information block, SIB) is proposed. The two manners may be used in combination or may be separately used. In addition, the embodiment in the second aspect may be combined with the embodiment in the first aspect, or the embodiment in the second aspect may be independently used. The embodiments of this application are not limited thereto.

For ease of understanding, a broadcast manner and a groupcast manner of sending data in the embodiments of this application are first described.

Broadcast manner: When a packet is sent in the broadcast manner, the packet is sent from a single source to all hosts in a shared Ethernet, and all the hosts that receive the packet need to process the packet. By way of example rather than limitation, a length of a MAC address of the broadcast-type Ethernet packet is 48 bits, a value of each bit is 1, and the length is FF-FF-FF-FF-FF-FF in hexadecimal notation.

Groupcast manner: When a packet is sent in the groupcast manner, the packet is sent from a source device to a group of hosts. The groupcast manner may be understood as a broadcast manner with selectivity. In the groupcast manner, hosts belonging to one group are allocated with one groupcast address. The host listens to a specific groupcast address, and receives and processes a packet whose destination MAC address is the groupcast MAC address.

In the embodiments of this application, for brevity of description, an Ethernet packet sent in the broadcast manner may be referred to as a broadcast-type Ethernet packet, an Ethernet packet sent in the groupcast manner may be referred to as a groupcast-type Ethernet packet, and an Ethernet packet sent in a unicast manner may be referred to as a unicast-type Ethernet packet. In addition, an RNTI for the broadcast-type Ethernet packet may be referred to as a broadcast-type RNTI for short, an RNTI for the groupcast-type Ethernet packet may be referred to as a groupcast-type RNTI for short, and an RNTI for the unicast-type Ethernet packet may be referred to as a unicast-type RNTI for short. The two descriptions are interchangeable.

In addition, because a broadcast-type or groupcast-type packet needs to be sent to a plurality of terminal devices, for ease of description, any one of the plurality of terminal devices is used as an example to describe the embodiments of this application.

The following separately describes the foregoing two manners with reference to FIG. 10 and FIG. 11.

### Manner A

A network device sends a broadcast-type Ethernet packet based on an RNTI that is for a broadcast-type or groupcast-type Ethernet packet.

By way of example rather than limitation, Manner A may be used in a scenario in which the terminal device is in a connected mode.

FIG. 10 is a schematic interaction diagram of a communication method 600 for Ethernet data according to an embodiment of this application.

S610: The network device sends downlink control information DCI to a terminal device, where the DCI is scrambled by using a first radio network temporary identifier (radio network temporary identifier, RNTI), the first RNTI is an RNTI for an Ethernet packet, and the DCI includes information used to indicate a time-frequency resource carrying the Ethernet packet.

S620: The network device sends the Ethernet packet to the terminal device.

S630: The terminal device receives the Ethernet packet from the network device on the time-frequency resource indicated by the DCI.

In a possible implementation, the first RNTI may be an RNTI for a non-unicast type Ethernet packet. For example, the first RNTI may be for a groupcast-type Ethernet packet, a broadcast-type Ethernet packet, or another-type Ethernet packet. This is not limited in this embodiment of this application. In an implementation, for example, scheduling information (namely, DCI) used to schedule a unicast-type Ethernet packet is scrambled by using a second RNTI, and the first RNTI is newly introduced, and is used to scramble DCI for the non-unicast-type Ethernet packet.

Specifically, when needing to schedule the non-unicast-type Ethernet packet, the network device may scramble, by using the first RNTI, the DCI for scheduling the non-unicast-type Ethernet packet. After detecting and receiving the DCI, the terminal device may learn that the packet scheduled by using the DCI is an Ethernet packet, and receive the Ethernet packet on a time-frequency resource indicated by the DCI.

In this embodiment of this application, the first RNTI is specially used to receive the non-unicast-type Ethernet packet, and may be understood as an identifier of the terminal device in signal information between the terminal device and the network device. The identifier may be preconfigured on the terminal device, or may be stipulated in a protocol, or may be received by the terminal device from the network device. If the identifier is stipulated in the protocol, only a terminal device that supports an Ethernet type receives downlink scheduling information (for example, DCI) by using the identifier. If the identifier is configured, only a terminal device that receives the identifier receives downlink scheduling information by using the identifier. If the identifier is received by the terminal device from the network device, the terminal device receives the identifier by using a dedicated or broadcast message.

In a possible implementation, the first RNTI is an RNTI for a broadcast-type or groupcast-type Ethernet packet.

Specifically, if needing to send a broadcast-type Ethernet packet, the network device scrambles, by using a broadcast-type RNTI (for example, an RNTI 1), DCI indicating a time-frequency resource for the Ethernet packet. If needing to send a groupcast-type Ethernet packet, the network device scrambles, by using a groupcast-type RNTI (for example, an RNTI 2), DCI indicating a time-frequency resource for the Ethernet packet. The terminal device may receive both the DCI scrambled by using the RNTI 1 and the DCI scrambled by using the RNTI 2, and determine a type of an Ethernet packet based on the scrambling identifiers, that is, determine whether the Ethernet packet is a broadcast-type or groupcast-type Ethernet packet. Another type of Ethernet packet may be transmitted and received in a same manner.

By way of example rather than limitation, in an implementation, there are a plurality of types of reserved RNTIs in a system. When sending an Ethernet packet, the network device may select, from the reserved RNTIs based on a type of the Ethernet packet, an RNTI corresponding to the type of the packet to scramble DCI. For example, if the Ethernet packet is a broadcast-type Ethernet packet, the network device may select, from the reserved RNTIs, a broadcast-type RNTI (for example, the RNTI 1) to scramble DCI indicating a time-frequency resource for the Ethernet packet. If the Ethernet packet is a groupcast-type Ethernet packet, the network device may select, from the reserved RNTIs, a groupcast-type RNTI (for example, the RNTI 2) to scramble DCI indicating a time-frequency resource for the Ethernet packet.

The following describes content of the first RNTI separately by using the broadcast-type RNTI and the groupcast-type RNTI.

The first RNTI is the broadcast-type RNTI.

If the first RNTI is the broadcast-type RNTI, a terminal device in a cell within a broadcast range listens to DCI scrambled by using the first RNTI, and after receiving the DCI, receives an Ethernet packet on a time-frequency resource indicated by the DCI.

Because the first RNTI is the broadcast-type RNTI, and usually, a MAC address in a broadcast-type Ethernet packet is fixed, for example, is FF-FF-FF-FF-FF-FF described above, the broadcast-type MAC address may not need to be added to the packet. Therefore, this embodiment of this application provides a possible implementation:
The first RNTI is an RNTI for a broadcast-type Ethernet packet, and a header of the Ethernet packet does not include a broadcast-type media access control MAC address.

In this way, the broadcast-type MAC address is deleted from the broadcast-type Ethernet packet, so that resources can be effectively saved.

In a possible implementation, the DCI includes first information, and the first information is used to indicate that the packet scheduled by using the DCI is a broadcast-type Ethernet packet.

The first RNTI is the groupcast-type RNTI.

For the groupcast-type RNTI, at least one groupcast-type RNTI may be configured for at least one group of terminal devices, and one group of terminal devices corresponds to one groupcast-type RNTI. If the first RNTI is the groupcast-type RNTI, a terminal device in a group corresponding to the first RNTI listens to the first RNTI, and after receiving the DCI, receives an Ethernet packet on a time-frequency resource indicated by the DCI.

In a possible implementation, the DCI includes first information, and the first information is used to indicate that the packet scheduled by using the DCI is a groupcast-type Ethernet packet.

Therefore, according to the communication method for Ethernet data in this embodiment of this application, the DCI is scrambled by using an RNTI dedicated to the broadcast type or the groupcast type, to reduce interference to a terminal device other than a terminal device that needs to receive the data of broadcast type or the groupcast type, thereby improving performance of transmitting the Ethernet data.

In this embodiment of this application, when the Ethernet packet is a groupcast-type Ethernet packet, if a groupcast MAC address corresponds to an RNTI, that is, if the terminal device can determine a groupcast address based on the groupcast-type RNTI, a header of the Ethernet packet may not include a groupcast-type MAC address. For example, one RNTI is set for each groupcast group, and is used to scramble DCI used to schedule a packet of at least one terminal device in each groupcast group. In this way, the terminal device in the groupcast group may determine, based on the RNTI corresponding to the groupcast group, the groupcast group corresponding to the RNTI; and further, may not include a MAC address in a header of an Ethernet packet.

When the network device is an access network device, to help the access network device identify a type of an Ethernet packet received from a core network device, a common quality of service (quality of service, QoS) flow may be established between the access network device and the core network device, where the common QoS flow is a QoS flow used to carry a broadcast-type or groupcast-type Ethernet packet. In an implementation process, if receiving an Ethernet packet from the common QoS flow, the network device considers that the received Ethernet packet needs to be sent by the network device to the terminal device in a broadcast manner or a groupcast manner.

In this embodiment of this application, the DCI may not need to indicate the time-frequency resource carrying the Ethernet packet, the DCI is scrambled by using the first RNTI, and the time-frequency resource carrying the Ethernet packet is indicated by using a SIB. The terminal device receives the Ethernet packet based on the DCI and the SIB.

To enable the network device to learn whether the terminal device has successfully received the Ethernet packet, the terminal device may send feedback information to the network device. Specifically, for how to send the feedback information, by way of example rather than limitation, after receiving the Ethernet packet, the terminal device may send a feedback on an uplink channel such as a physical uplink shared channel (physical uplink shared channel, PUSCH) or a physical uplink control channel (physical uplink control channel, PUCCH) in a preconfigured sequence.

The preconfigured sequence has two meanings:
First: Regardless of whether information about the terminal device exists in the broadcast-type or groupcast-type Ethernet packet, after receiving the Ethernet packet, the terminal device occupies a feedback resource to send the feedback information.

Second: As long as information about the terminal device exists in the broadcast-type or groupcast-type Ethernet packet, after receiving the Ethernet packet, the terminal device occupies a feedback sending resource to send the feedback information.

Herein, the feedback resource may be determined in any one of the following manners:
the terminal device obtains the feedback resource through mapping based on a location of a radio frame in which the Ethernet packet is located; or
the terminal device obtains the feedback resource through mapping based on a location of a start radio frame in which the Ethernet packet is located; or
the terminal device obtains the feedback resource through mapping based on a location of an end radio frame in which the Ethernet packet is located; or
the terminal device obtains the feedback resource through mapping based on a location of a control channel element (control channel element, CCE) of the DCI used for scheduling the Ethernet packet.

### Manner B

A network device sends a broadcast-type Ethernet packet by using a SIB.

FIG. 11 is a schematic interaction diagram of a communication method 700 for Ethernet data according to an embodiment of this application.

S701: A network device sends a paging message, where the paging message includes indication information, and the indication information is used to indicate that the SIB includes the Ethernet packet.

In other words, the indication information is used to indicate that a type of the SIB is a type of a SIB including an Ethernet packet, or the indication information is used to notify the terminal device that the network device is to send the Ethernet packet in the SIB.

S710: The network device generates the SIB, where the SIB includes the Ethernet packet.

By way of example rather than limitation, the SIB may further indicate an Ethernet frame format, and a virtual network label and/or a service virtual network label.

S720: The network device sends the SIB to the terminal device.

By way of example rather than limitation, the network device may not need to send the indication information, or may not need to send the indication information in the paging message, and the terminal device directly receives the SIB.

Therefore, according to the communication method for Ethernet data that is provided in this embodiment of this application, the broadcast-type Ethernet packet is sent by using the SIB, to efficiently notify the terminal device to receive the Ethernet packet, thereby improving transmission efficiency.

In addition, the third information is added to the paging message, so that a paging message sending mechanism can be effectively used. To be specific, the terminal device receives the paging message in a time periodicity to detect whether there is a message for the terminal device, thereby reducing design complexity, and improving reliability of receiving the packet by the terminal device.

As described in Manner A, usually, a MAC address in a broadcast-type Ethernet packet is fixed, for example, is FF-FF-FF-FF-FF-FF described above. In this case, the broadcast-type MAC address may not need to be added to the packet. Therefore, this embodiment of this application provides a possible implementation:
A header of the Ethernet packet does not include a broadcast-type media access control MAC address.

In this way, the broadcast-type MAC address is deleted from the broadcast-type Ethernet packet, so that resources can be effectively saved.

A similarity to Manner A lies in that in Manner B, if the network device is an access network device, a common QoS flow may be established between the access network device and a core network device. If receiving an Ethernet packet from the common QoS flow, the access network device considers that the received Ethernet packet needs to be sent by the network device to the terminal device in a broadcast manner or a groupcast manner. In addition, to enable the network device to learn whether the terminal device has successfully received the Ethernet packet, the terminal device may send feedback information to the network device. Specifically, for how to send the feedback information, refer to the related descriptions in Manner A. For brevity, details are not described herein again.

In this embodiment of this application, Manner A and Manner B may be combined for use. For example:
The network device sends downlink control information DCI to the terminal device, where the DCI is scrambled by using a first radio network temporary identifier RNTI, the first RNTI is an RNTI for an Ethernet packet, and the DCI includes information used to indicate a time-frequency resource carrying the Ethernet packet.

The network device sends a SIB to the terminal device, where the SIB includes the Ethernet packet.

The terminal device receives the SIB from the network device on the time-frequency resource indicated by the DCI. In other words, in this manner, the Ethernet packet may be carried in the SIB. For descriptions of the first RNTI, refer to the descriptions of the first RNTI in Manner A, and details are not described herein again.

The foregoing describes the embodiment in the second aspect in detail with reference to FIG. 10 and FIG. 11. The following describes the embodiment in the third aspect in the embodiments of this application in detail with reference to FIG. 12.

It has been clearly stated in the first aspect that the Ethernet packet needs to carry the MAC address of the terminal device, to facilitate correct transmission of the Ethernet packet. Therefore, the network device needs to learn of, in time, the MAC address of the terminal device that is in communication connection with the network device. In the third aspect, a solution about how to report a MAC address is proposed. The third aspect may be used in combination with at least one of the first aspect or the second aspect, or may be independently used.

In this embodiment of this application, the terminal device may send the MAC address in three cases. The following separately describes the three cases.

### Case 1

The terminal device reports the MAC address after receiving request message sent by the network device.

FIG. 12 is a schematic interaction diagram of a communication method 800 for Ethernet data according to an embodiment of this application.

S810: The network device sends the request message, where the request message is used to request a media access control MAC address associated with the terminal device.

S820: The terminal device sends the MAC address to the network device.

The MAC address associated with the terminal device may include a MAC address of the terminal device, and may further include a MAC address of another terminal device that is connected to the terminal device in a wired or wireless manner. For differentiation, the terminal device may be used as a relay terminal, and a terminal device associated with the terminal device may be used as an associated terminal. The terminal device needs to report the MAC address associated with the terminal device because in the system with the topology shown in FIG. 1, one terminal device may be connected to a plurality of terminal devices. For example, the terminal device 131 is not only connected to the terminal device 132, but also connected to another terminal device, and the terminal device 131 needs to forward data for the terminal device 132 and the another terminal device, and serves as a relay device of the terminal device 132 and the another terminal device. To correctly transmit an Ethernet packet, the terminal device 131 also needs to report, to the network device, a MAC address of another terminal device connected to the terminal device 131.

The network device may be an access network device or a core network device. By way of example rather than limitation, if the network device is an access network device, the access network device may send dedicated RRC signaling, to request the terminal device to report the MAC address used by the terminal device. If the network device is a core network device, the core network device may send dedicated NAS signaling, to request the terminal device to report the used MAC address. It may be understood that the request message may be an identifier query request for a MAC type of the terminal device.

Therefore, according to the communication method for Ethernet data in this embodiment of this application, the network device sends, to the terminal device, the request message used to request the MAC address of the terminal device, so that the terminal device can report the MAC address to the network device in time. In this way, the network device can learn of the MAC address of the terminal device in time, thereby facilitating data transmission.

For a manner of reporting the MAC address, in a possible implementation, the terminal device sends a non-access stratum NAS message, where the NAS message includes the response information.

To be specific, after registering with a mobile network and enabling NAS security protection, the terminal device may report the MAC address of the terminal device to the network device (for example, the core network device) by using the NAS message. Optionally, the core network device may send the received MAC address to the access network device. For example, the NAS message may be a tracking area update (tracking area update, TAU) or PDU session establishment request.

In another possible implementation, the terminal device may report the MAC address to the core network device by using a service request message or a PDN connection setup request message. Optionally, the core network device may send the received MAC address to the access network device.

### Case 2

When the media access control MAC address associated with the terminal device changes, the terminal device sends the changed MAC address to the network device.

For example, if a network adapter of an Ethernet device that is connected to the terminal device in a wired manner is changed, the MAC address usually changes. In this case, the terminal device needs to update the MAC address, and therefore needs to report the changed MAC address to the network device.

For a manner of reporting the MAC address, refer to the related descriptions in Case 1. For brevity, details are not described herein again.

### Case 3

The terminal device periodically reports the MAC address associated with the terminal device.

By way of example rather than limitation, duration of periodic reporting may be configured by the network device by using a timer, or may be configured by the terminal device by using a timer.

The terminal device may report the MAC address to the network device by using dedicated RRC signaling or dedicated NAS signaling.

For example, the MAC address is indicated in a tracking area update (tracking Area update, TAU) message. For another example, a newly added MAC address is indicated in a TAU request message.

The foregoing describes the embodiment in the third aspect in detail, and the following describes the embodiment in the fourth aspect in the embodiments of this application in detail.

As described above, the fourth aspect describes how the network device locates and searches for the terminal device. In the fourth aspect, the network device sends a paging message to the terminal device, where the paging message carries a MAC address of a terminal device that needs to be paged, and the terminal device may determine, based on the MAC address in the received paging message, whether the MAC address is a MAC address of the terminal device or a MAC address of another terminal device connected to the terminal device. Specifically, the terminal device may determine whether the received MAC address matches a MAC address provided or allocated at a higher layer, and if the received MAC address matches the MAC address provided or allocated at the higher layer, forward the MAC address to the higher layer; and the terminal device initiates an RRC connection setup request or an RRC connection resume request, or notifies the another terminal device to initiate an RRC connection setup request or an RRC connection resume request.

The foregoing describes the four aspects in the embodiments of this application in detail. The embodiments in the foregoing four aspects may be separately used, or may be used in combination. The following describes a case in which at least one of the four aspects is used in combination.

The second aspect is used in combination with the first aspect. The broadcast-type or groupcast-type Ethernet packet described in the second aspect may be the third Ethernet packet in the method 400 in the first aspect, or may be the fifth Ethernet packet when the transmit end is a network device in the method 500. It may be understood in this way: The first aspect describes how to compress the Ethernet packet, and the second aspect describes: if the Ethernet packet is a broadcast-type or groupcast-type Ethernet packet, the Ethernet packet may be sent in Manner A and Manner B in the second aspect.

The third aspect is used in combination with the first aspect. In the third aspect, the terminal device reports the MAC address. In the first aspect, when sending the Ethernet packet (for example, the third Ethernet packet in the method 400 or the fifth Ethernet packet when the transmit end is a network device in the method 500), the network device includes the reported MAC address in the context information corresponding to the Ethernet packet, and includes, in the Ethernet packet, the context identifier corresponding to the context information; or includes the reported MAC address in the Ethernet packet (for example, the fourth Ethernet packet in the method 400 or the sixth Ethernet packet when the transmit end is a network device in the method 500).

The third aspect is used in combination with the second aspect. In the third aspect, the terminal device reports the MAC address. In the second aspect, when sending the broadcast-type or groupcast-type Ethernet packet, the network device includes the reported MAC address in the Ethernet packet.

The third aspect is used in combination with the second aspect and the first aspect. The broadcast-type or groupcast-type Ethernet packet may be the third Ethernet packet or the fourth Ethernet packet in the method 400 in the first aspect, or may be the fifth Ethernet packet or the sixth Ethernet packet when the transmit end is a network device in the method 500. When the Ethernet packet is the third Ethernet packet in the method 400 or the fifth Ethernet packet when the transmit end is a network device in the method 500, the reported MAC address may be carried in the context information corresponding to the Ethernet packet, and the context identifier corresponding to the context information may be carried in the Ethernet packet. When the Ethernet packet is the fourth Ethernet packet in the method 400 or the sixth Ethernet packet when the transmit end is a network device in the method 500, the reported MAC address may be carried in the Ethernet packet.

The fourth aspect is used in combination with the first aspect, the second aspect, or the third aspect, and when the network device is in an abnormal state, may be used to search for the terminal device in any scenario in the first aspect, the second aspect, or the third aspect.

It should be understood that sequence numbers of the foregoing processes do not indicate an execution sequence. The execution sequence of the processes should be determined based on functions and internal logic of the processes, and should not be construed as any limitation on an implementation process of the embodiments of this application.

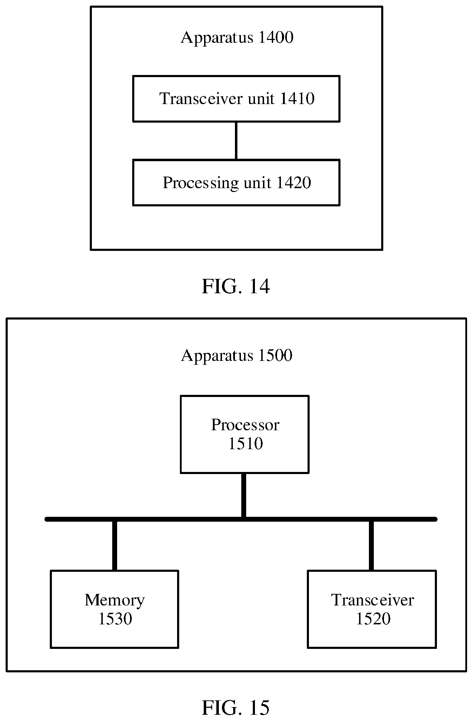

The foregoing describes the communication method for Ethernet data according to the embodiments of this application in detail with reference to FIG. 1 to FIG. 13. The following describes an apparatus for Ethernet data according to the embodiments of this application in detail with reference to FIG. 14 and FIG. 15.

FIG. 14 shows an apparatus 1400 for Ethernet data according to an embodiment of this application. The apparatus 1400 may be a terminal device, or may be a chip in a terminal device. The apparatus 1400 may be a network device, or may be a chip in a network device. The apparatus 1400 includes a transceiver unit 1410 and a processing unit 1420.

In a possible implementation, the apparatus 1400 is configured to perform procedures and steps corresponding to the terminal device in the method 300.

The transceiver unit 1410 is configured to receive compression configuration information from a network device, where the compression configuration information is used to indicate a parameter of a first Ethernet compression capability. The processing unit 1420 is configured to generate a first Ethernet packet based on the parameter of the first Ethernet compression capability. The transceiver unit 1410 is further configured to send the first Ethernet packet to the network device.

Optionally, the transceiver unit 1410 is further configured to send compression capability information to the network device, where the compression capability information is used to indicate N Ethernet compression capabilities supported by the apparatus, and the N Ethernet compression capabilities include the first Ethernet compression capability, where N is an integer greater than or equal to 1.

Optionally, the parameter of the first Ethernet compression capability includes an enabling parameter, and the enabling parameter is used to indicate the apparatus to use the first Ethernet compression capability.

Optionally, the parameter of the first Ethernet compression capability includes a frame format parameter used to indicate a first frame format or an algorithm parameter used to indicate a compression algorithm of a first frame format, and the first frame format is a frame format of the first Ethernet packet.

Optionally, the first Ethernet packet includes a first header, the first header includes a first context identifier, and the first context identifier is used to identify first context information.

Optionally, the transceiver unit 1410 is further configured to send a first correspondence between the first context identifier and the first context information to the network device.

Optionally, the transceiver unit 1410 is further configured to send a second Ethernet packet to the network device, where the second Ethernet packet includes a second header, and the second header includes the first correspondence.

Optionally, the second header further includes a frame format of the second Ethernet packet, and the frame format of the second Ethernet packet is the same as the frame format of the first Ethernet packet.

Optionally, the transceiver unit 1410 is further configured to send a correspondence between a context identifier and context information to the network device, where the correspondence includes the first correspondence.

Optionally, the transceiver unit 1410 is further configured to receive first feedback information from the network device, where the first feedback information is used to indicate that the network device successfully receives the first correspondence.

Optionally, the first feedback information includes the first context identifier.

Optionally, the transceiver unit 1410 is further configured to receive second feedback information from the network device, where the second feedback information is used to indicate that the network device successfully decompresses the first Ethernet packet.

In another possible implementation, the apparatus 1400 is configured to perform procedures and steps corresponding to the network device in the method 300.

The transceiver unit 1410 is configured to: send compression configuration information to a terminal device, where the compression configuration information is used to indicate a parameter of a first Ethernet compression capability; and receive a first Ethernet packet, where the first Ethernet packet is generated based on the parameter of the first Ethernet compression capability. The processing unit 1420 is configured to decompress the first Ethernet packet.

Optionally, the transceiver unit 1410 is further configured to receive compression capability information from the terminal device, where the compression capability information is used to indicate N Ethernet compression capabilities supported by the terminal device, and the N Ethernet compression capabilities include the first Ethernet compression capability, where N is an integer greater than or equal to 1.

Optionally, the parameter of the first Ethernet compression capability includes an enabling parameter, and the enabling parameter is used to indicate the terminal device to use the first Ethernet compression capability.

Optionally, the parameter of the first Ethernet compression capability includes a frame format parameter used to indicate a first frame format and/or an algorithm parameter used to indicate a compression algorithm of the first frame format, and the first frame format is a frame format of the first Ethernet packet.

Optionally, the first Ethernet packet includes a first header, the first header includes a first context identifier, and the first context identifier is used to identify first context information; and the processing unit 1420 is further configured to: obtain the first context information based on the first context identifier; and decompress the first Ethernet packet based on the first context information.

Optionally, the transceiver unit 1410 is further configured to receive a first correspondence between the first context identifier and the first context information from the terminal device.

Optionally, the transceiver unit 1410 is further configured to receive a second Ethernet packet from the terminal device, where the second Ethernet packet includes a second header, and the second header includes the first correspondence.

Optionally, the second header further includes a frame format of the second Ethernet packet, and the frame format of the second Ethernet packet is the same as the frame format of the first Ethernet packet.

Optionally, the transceiver unit 1410 is further configured to receive a correspondence between a context identifier and context information from the terminal device, where the correspondence includes the first correspondence.

Optionally, the transceiver unit 1410 is further configured to send first feedback information to the terminal device, where the first feedback information is used to indicate that the apparatus successfully receives the first correspondence.

Optionally, the first feedback information includes the first context identifier.

Optionally, the transceiver unit 1410 is further configured to send second feedback information to the terminal device, where the second feedback information is used to indicate that the apparatus successfully decompresses the first Ethernet packet.

In another possible implementation, the apparatus 1400 is configured to perform procedures and steps corresponding to the terminal device in the method 400.

The transceiver unit 1410 is configured to: receive compression configuration information from a network device, where the compression configuration information is used to indicate a parameter of a third Ethernet compression capability; and receive a third Ethernet packet from the network device, where the third Ethernet packet is generated based on the parameter of the third Ethernet compression capability. The processing unit 1420 is configured to decompress the third Ethernet packet.

Optionally, the transceiver unit 1410 is further configured to send compression capability information to the network device, where the compression capability information is used to indicate N Ethernet compression capabilities supported by the apparatus, and the N Ethernet compression capabilities include the third Ethernet compression capability, where N is an integer greater than or equal to 1.

Optionally, the parameter of the third Ethernet compression capability includes an enabling parameter, and the enabling parameter is used to indicate the apparatus to use the third Ethernet compression capability.

Optionally, the parameter of the third Ethernet compression capability includes a frame format parameter used to indicate a third frame format or an algorithm parameter used to indicate a compression algorithm of a third frame format, and the third frame format is a frame format of the third Ethernet packet.

Optionally, the third Ethernet packet includes a third header, the third header includes a third context identifier, and the third context identifier is used to identify third context information; and the processing unit 1420 is further configured to: obtain the third context information based on the third context identifier; and decompress the third Ethernet packet based on the third context information.

Optionally, the transceiver unit 1410 is further configured to receive a third correspondence between the third context identifier and the third context information from the network device.

Optionally, the transceiver unit 1410 is further configured to receive a fourth Ethernet packet from the network device, where the fourth Ethernet packet includes a fourth header, and the fourth header includes the third correspondence.

Optionally, the fourth header further includes a frame format of the fourth Ethernet packet, and the frame format of the fourth Ethernet packet is the same as the frame format of the third Ethernet packet.

Optionally, the transceiver unit 1410 is further configured to receive a correspondence between a context identifier and context information from the network device, where the correspondence includes the third correspondence.

Optionally, the transceiver unit 1410 is further configured to send third feedback information to the network device, where the third feedback information is used to indicate that the apparatus successfully receives the third correspondence.

Optionally, the third feedback information includes the third context identifier.

Optionally, the transceiver unit 1410 is further configured to send fourth feedback information to the network device, where the fourth feedback information is used to indicate that the apparatus successfully decompresses the third Ethernet packet.

In another possible implementation, the apparatus 1400 is configured to perform procedures and steps corresponding to the network device in the method 400.

The transceiver unit 1410 is configured to send compression configuration information to a terminal device, where the compression configuration information is used to indicate a parameter of a third Ethernet compression capability. The processing unit 1420 is configured to generate a third Ethernet packet based on the parameter of the third Ethernet compression capability. The transceiver unit 1410 is further configured to send the third Ethernet packet to the terminal device.

Optionally, the transceiver unit 1410 is further configured to receive compression capability information from the terminal device, where the compression capability information is used to indicate N Ethernet compression capabilities supported by the terminal device, and the N Ethernet compression capabilities include the third Ethernet compression capability, where N is an integer greater than or equal to 1.

Optionally, the parameter of the third Ethernet compression capability includes an enabling parameter, and the enabling parameter is used to indicate the terminal device to use the third Ethernet compression capability.

Optionally, the parameter of the third Ethernet compression capability includes a frame format parameter used to indicate a third frame format and/or an algorithm parameter used to indicate a compression algorithm of the third frame format, and the third frame format is a frame format of the third Ethernet packet.

Optionally, the third Ethernet packet includes a third header, the third header includes a third context identifier, and the third context identifier is used to identify third context information.

Optionally, the transceiver unit 1410 is further configured to send a third correspondence between the third context identifier and the third context information to the terminal device.

Optionally, the transceiver unit 1410 is further configured to send a fourth Ethernet packet to the terminal device, where the fourth Ethernet packet includes a fourth header, and the fourth header includes the third correspondence.

Optionally, the fourth header further includes a frame format of the fourth Ethernet packet, and the frame format of the fourth Ethernet packet is the same as the frame format of the third Ethernet packet.

Optionally, the transceiver unit 1410 is further configured to send a correspondence between a context identifier and context information to the terminal device, where the correspondence includes the third correspondence.

Optionally, the transceiver unit 1410 is further configured to receive third feedback information from the terminal device, where the third feedback information is used to indicate that the terminal device successfully receives the third correspondence.

Optionally, the third feedback information includes the third context identifier.

Optionally, the transceiver unit 1410 is further configured to receive fourth feedback information from the terminal device, where the fourth feedback information is used to indicate that the terminal device successfully decompresses the third Ethernet packet.

In another possible implementation, the apparatus 1400 is configured to perform procedures and steps corresponding to the transmit end in the method 500.

The processing unit 1420 is configured to generate a fifth Ethernet packet, where the fifth Ethernet packet includes a fifth header, the fifth header includes a fifth context identifier, and the fifth context identifier is used to identify fifth context information. The transceiver unit 1410 is configured to send the fifth Ethernet packet to a receive end.

Optionally, the transceiver unit 1410 is further configured to send a correspondence between a context identifier and context information to the receive end, where the correspondence includes a fifth correspondence between the fifth context identifier and the fifth context information.

Optionally, the transceiver unit 1410 is further configured to send a sixth Ethernet packet to the receive end, where the sixth Ethernet packet includes a sixth header, and the sixth header includes a correspondence between the fifth context identifier and the fifth context information.

Optionally, the sixth header further includes indication information used to indicate a type of a frame format of the sixth Ethernet packet, and the type of the frame format of the sixth Ethernet packet is the same as a type of a frame format of the fifth Ethernet packet.

Optionally, the transceiver unit 1410 is further configured to receive fifth feedback information from the receive end, where the fifth feedback information is used to indicate that the receive end successfully receives the correspondence.

Optionally, the fifth feedback information includes the context identifier in the correspondence.

Optionally, the transceiver unit 1410 is further configured to receive sixth feedback information from the receive end, where the sixth feedback information is used to indicate that the receive end successfully decompresses the fifth Ethernet packet.

Optionally, the apparatus is a terminal device, and the receive end is a network device; and the transceiver unit 1410 is further configured to:
receive compression configuration information from the receive end, where the compression configuration information is used to indicate a parameter of a fifth Ethernet compression capability; and generate the fifth Ethernet packet based on the parameter of the fifth Ethernet compression capability.

Optionally, the transceiver unit 1410 is further configured to send compression capability information to the receive end, where the compression capability information is used to indicate N Ethernet compression capabilities supported by the apparatus, and the N Ethernet compression capabilities include the fifth Ethernet compression capability, where N is an integer greater than or equal to 1.

Optionally, the apparatus is a network device, and the receive end is a terminal device; and the transceiver unit 1410 is further configured to send compression configuration information to the receive end, where the compression configuration information is used to indicate a parameter of a fifth Ethernet compression capability; and
generate the fifth Ethernet packet based on the parameter of the fifth Ethernet compression capability.

Optionally, the transceiver unit 1410 is further configured to receive compression capability information from the receive end, where the compression capability information is used to indicate N Ethernet compression capabilities supported by the receive end, and the N Ethernet compression capabilities include the fifth Ethernet compression capability, where N is an integer greater than or equal to 1.

In another possible implementation, the apparatus 1400 is configured to perform procedures and steps corresponding to the receive end in the method 500.

The transceiver unit 1410 is configured to receive a fifth Ethernet packet, where the fifth Ethernet packet includes a fifth header, the fifth header includes a fifth context identifier, and the fifth context identifier is used to identify fifth context information. The processing unit 1420 is configured to obtain the fifth context information based on the fifth context identifier. The processing unit 1420 is further configured to decompress the fifth Ethernet packet based on the fifth context information.

Optionally, the transceiver unit 1410 is further configured to receive a correspondence between a context identifier and context information, where the correspondence includes a fifth correspondence between the fifth context identifier and the fifth context information; and the processing unit 1420 is specifically configured to obtain the fifth context information based on the fifth context identifier and the fifth correspondence.

Optionally, the transceiver unit 1410 is further configured to receive a sixth Ethernet packet, where the sixth Ethernet packet includes a sixth header, and the sixth header includes a correspondence between the fifth context identifier and the fifth context information. The processing unit 1420 is specifically configured to obtain the fifth context information based on the fifth context identifier and the fifth correspondence.

Optionally, the sixth header further includes indication information used to indicate a type of a frame format of the sixth Ethernet packet, and the type of the frame format of the sixth Ethernet packet is the same as a type of a frame format of the fifth Ethernet packet.

Optionally, the transceiver unit 1410 is further configured to send fifth feedback information, where the fifth feedback information is used to indicate that the apparatus successfully receives the correspondence.

Optionally, the fifth feedback information includes the context identifier in the correspondence.

Optionally, the transceiver unit 1410 is further configured to send sixth feedback information, where the sixth feedback information is used to indicate that the apparatus successfully decompresses the fifth Ethernet packet.

Optionally, the apparatus is a network device, and the transmit end is a terminal device; and the transceiver unit 1410 is further configured to:
send compression configuration information to the transmit end, where the compression configuration information is used to indicate a parameter of a fifth Ethernet compression capability, and the fifth Ethernet packet is generated based on the parameter of the fifth Ethernet compression capability.

Optionally, the transceiver unit 1410 is further configured to receive compression capability information from the transmit end, where the compression capability information is used to indicate N Ethernet compression capabilities supported by the transmit end, and the N Ethernet compression capabilities include the fifth Ethernet compression capability, where N is an integer greater than or equal to 1.

Optionally, the apparatus is a terminal device, and the transmit end is a network device; and the transceiver unit 1410 is further configured to receive compression configuration information from the transmit end, where the compression configuration information is used to indicate a parameter of a fifth Ethernet compression capability, and the fifth Ethernet packet is generated based on the parameter of the fifth Ethernet compression capability.

Optionally, the transceiver unit 1410 is further configured to send compression capability information to the transmit end, where the compression capability information is used to indicate N Ethernet compression capabilities supported by the apparatus, and the N Ethernet compression capabilities include the fifth Ethernet compression capability, where N is an integer greater than or equal to 1.

In another possible implementation, the apparatus 1400 is configured to perform procedures and steps corresponding to the terminal device in the method 600.

The transceiver unit 1410 is configured to receive downlink control information DCI from a network device, where the DCI is scrambled by using a first radio network temporary identifier RNTI, the first RNTI is an RNTI for an Ethernet packet, and the DCI includes information used to indicate a time-frequency resource carrying the Ethernet packet. The transceiver unit 1410 is further configured to receive the Ethernet packet from the network device on the time-frequency resource indicated by the DCI.

Optionally, the transceiver unit 1410 is specifically configured to receive a system information block SIB from the network device on the time-frequency resource indicated by the DCI, where the SIB includes the Ethernet packet.

Optionally, the first RNTI is an RNTI for a broadcast-type or groupcast-type Ethernet packet.

Optionally, the DCI includes first information, and the first information is used to indicate that the packet scheduled by using the DCI is a broadcast-type or groupcast-type Ethernet packet.

Optionally, when the Ethernet packet is a broadcast-type Ethernet packet, a header of the Ethernet packet does not include a broadcast-type media access control MAC address.

Optionally, the transceiver unit 1410 is further configured to send, to the network device, a media access control MAC address associated with the apparatus.

Optionally, the transceiver unit 1410 is specifically configured to send a non-access stratum NAS message to the network device, where the NAS message includes the MAC address.

Optionally, the transceiver unit 1410 is further configured to receive a request message from the network device, where the request message is used to request the MAC address associated with the apparatus.

Optionally, the transceiver unit 1410 is further configured to: when the MAC address associated with the apparatus changes, send the changed MAC address to the network device.

Optionally, the transceiver unit 1410 is further configured to: send compression capability information to the network device, where the compression capability information is used to indicate N Ethernet compression capabilities supported by the apparatus, where N is an integer greater than or equal to 1; and
receive compression configuration information from the network device, where the compression configuration information is used to indicate a parameter of a first Ethernet compression capability, and the N Ethernet compression capabilities include the first Ethernet compression capability; and the processing unit 1420 is configured to decompress the Ethernet packet, where the Ethernet packet is generated based on the parameter of the first Ethernet compression capability.

Optionally, the Ethernet packet includes a first header, the first header includes a first context identifier, and the first context identifier is used to identify first context information. The transceiver unit 1410 is further configured to obtain the first context information based on the first context identifier. The processing unit 1420 is specifically configured to decompress the Ethernet packet based on the first context information.

In another possible implementation, the apparatus 1400 is configured to perform procedures and steps corresponding to the network device in the method 600.

The transceiver unit 1410 is configured to send downlink control information DCI to a terminal device, where the DCI is scrambled by using a first radio network temporary identifier RNTI, the first RNTI is an RNTI for an Ethernet packet, and the DCI includes information used to indicate a time-frequency resource carrying the Ethernet packet. The transceiver unit 1410 is further configured to send the Ethernet packet to the terminal device on the time-frequency resource.

Optionally, the transceiver unit 1410 is specifically configured to send a system information block SIB to the terminal device on the time-frequency resource, where the SIB includes the Ethernet packet.

Optionally, the first RNTI is an RNTI for a broadcast-type or groupcast-type Ethernet packet.

Optionally, the DCI includes first information, and the first information is used to indicate that the packet scheduled by using the DCI is a broadcast-type or groupcast-type Ethernet packet.

Optionally, the apparatus is an access network device, and a common quality of service QoS flow is established between the access network device and a core network device; and the transceiver unit 1410 is further configured to receive the Ethernet packet from the common QoS flow.

Optionally, the transceiver unit 1410 is further configured to receive, from the terminal device, a media access control MAC address associated with the terminal device.

Optionally, the transceiver unit 1410 is specifically configured to receive a non-access stratum NAS message from the terminal device, where the NAS message includes the MAC address.

Optionally, the transceiver unit 1410 is further configured to send a request message to the terminal device, where the request message is used to request the MAC address associated with the terminal device.

Optionally, the transceiver unit 1410 is further configured to: receive compression capability information from the terminal device, where the compression capability information is used to indicate N Ethernet compression capabilities supported by the terminal device, where N is an integer greater than or equal to 1; and send compression configuration information to the terminal device, where the compression configuration information is used to indicate a parameter of a first Ethernet compression capability, and the N Ethernet compression capabilities include the first Ethernet compression capability. the processing unit 1420 is configured to generate the Ethernet packet based on the parameter of the first Ethernet compression capability.

Optionally, the Ethernet packet includes a first header, the first header includes a first context identifier, and the first context identifier is used to identify first context information.

In another possible implementation, the apparatus 1400 is configured to perform procedures and steps corresponding to the terminal device in the method 700.

The transceiver unit 1410 is configured to receive a system information block SIB from a network device, where the SIB includes an Ethernet packet. The processing unit 1420 is configured to obtain the Ethernet packet from the SIB.

Optionally, the transceiver unit 1410 is further configured to receive a paging message from the network device, where the paging message includes indication information, and the indication information is used to indicate that the SIB includes the Ethernet packet.

Optionally, the transceiver unit 1410 is further configured to receive downlink control information DCI from the network device, where the DCI is scrambled by using a first radio network temporary identifier RNTI, the first RNTI is an RNTI for the Ethernet packet, and the DCI includes information used to indicate a time-frequency resource carrying the Ethernet packet.

Optionally, the DCI includes first information, and the first information is used to indicate that the packet scheduled by using the DCI is a broadcast-type or groupcast-type Ethernet packet.

Optionally, when the Ethernet packet is a broadcast-type Ethernet packet, a header of the Ethernet packet does not include a broadcast-type media access control MAC address.

Optionally, the transceiver unit 1410 is further configured to send, to the network device, a media access control MAC address associated with the apparatus.

Optionally, the transceiver unit 1410 is specifically configured to send a non-access stratum NAS message to the network device, where the NAS message includes the MAC address.

Optionally, the transceiver unit 1410 is further configured to receive a request message from the network device, where the request message is used to request the MAC address associated with the apparatus.

Optionally, the transceiver unit 1410 is specifically configured to: when the MAC address associated with the apparatus changes, send the changed MAC address to the network device.

Optionally, the transceiver unit 1410 is further configured to: send compression capability information to the network device, where the compression capability information is used to indicate N Ethernet compression capabilities supported by the apparatus, where N is an integer greater than or equal to 1; and receive compression configuration information from the network device, where the compression configuration information is used to indicate a parameter of a first Ethernet compression capability, and the N Ethernet compression capabilities include the first Ethernet compression capability. The processing unit 1420 is further configured to decompress the Ethernet packet, where the Ethernet packet is generated based on the parameter of the first Ethernet compression capability.

Optionally, the Ethernet packet includes a first header, the first header includes a first context identifier, and the first context identifier is used to identify first context information. The transceiver unit 1410 is further configured to obtain the first context information based on the first context identifier. The processing unit 1420 is specifically configured to decompress the Ethernet packet based on the first context information.

In another possible implementation, the apparatus 1400 is configured to perform procedures and steps corresponding to the network device in the method 700.

The processing unit 1420 is configured to generate a system information block SIB, where the SIB includes an Ethernet packet. The transceiver unit 1410 is configured to send the SIB.

Optionally, the transceiver unit 1410 is further configured to send a paging message to the terminal device, where the paging message includes indication information, and the indication information is used to indicate that the SIB includes the Ethernet packet.

Optionally, the transceiver unit 1410 is further configured to send downlink control information DCI to the terminal device, where the DCI is scrambled by using a first radio network temporary identifier RNTI, the first RNTI is an RNTI for the Ethernet packet, and the DCI includes information used to indicate a time-frequency resource carrying the Ethernet packet.

Optionally, the DCI includes first information, and the first information is used to indicate that the packet scheduled by using the DCI is a broadcast-type or groupcast-type Ethernet packet.

Optionally, when the Ethernet packet is a broadcast-type Ethernet packet, a header of the Ethernet packet does not include a broadcast-type media access control MAC address.

Optionally, the transceiver unit 1410 is further configured to receive, from the terminal device, a media access control MAC address associated with the terminal device.

Optionally, the transceiver unit 1410 is specifically configured to receive a non-access stratum NAS message from the terminal device, where the NAS message includes the MAC address.

Optionally, the transceiver unit 1410 is further configured to send a request message to the terminal device, where the request message is used to request the MAC address associated with the terminal device.

Optionally, the transceiver unit 1410 is further configured to: receive compression capability information from the terminal device, where the compression capability information is used to indicate N Ethernet compression capabilities supported by the terminal device, where N is an integer greater than or equal to 1; and
send compression configuration information to the terminal device, where the compression configuration information is used to indicate a parameter of a first Ethernet compression capability, and the N Ethernet compression capabilities include the first Ethernet compression capability; and the processing unit 1420 is further configured to generate the Ethernet packet based on the parameter of the first Ethernet compression capability.

Optionally, the Ethernet packet includes a first header, the first header includes a first context identifier, and the first context identifier is used to identify first context information.

In another possible implementation, the apparatus 1400 is configured to perform procedures and steps corresponding to the terminal device in the method 800.

The transceiver unit 1410 is configured to receive a request message from a network device, where the request message is used to request a media access control MAC address associated with the apparatus. The transceiver unit 1410 is further configured to send the MAC address to the network device.

Optionally, the transceiver unit 1410 is specifically configured to send a non-access stratum NAS message, where the NAS message includes the MAC address.

In another possible implementation, the apparatus 1400 is configured to perform procedures and steps corresponding to the network device in the method 800.

The transceiver unit 1410 is configured to send a request message to a terminal device, where the request message is used to request a media access control MAC address associated with the terminal device. The transceiver unit 1410 is further configured to receive the MAC address from the terminal device.

Optionally, the transceiver unit 1410 is specifically configured to receive a non-access stratum NAS message from the terminal device, where the NAS message includes the MAC address.

It should be understood that the apparatus 1400 herein is presented in a form of functional units. The term "unit" herein may be an application-specific integrated circuit (application-specific integrated circuit, ASIC), an electronic circuit, a processor (for example, a shared processor, a dedicated processor, or a group processor) configured to execute one or more software or firmware programs and a memory, a merged logic circuit, and/or another proper component that supports the described functions. In an optional example, a person skilled in the art may understand that the apparatus 1400 may be specifically the terminal device or the network device (respectively used as a transmit end or a receive end) in the foregoing embodiments, and the apparatus 1400 may be configured to perform procedures and/or steps corresponding to the terminal device or the network device in the foregoing method embodiments. To avoid repetition, details are not described herein again.

The apparatus 1400 in each of the foregoing solutions has a function of implementing corresponding steps performed by the terminal device or the network device (respectively used as a transmit end or a receive end) in the foregoing methods. The function may be implemented by hardware, or may be implemented by hardware executing corresponding software. The hardware or the software includes one or more modules corresponding to the foregoing function. For example, a sending unit may be replaced with a transmitter, a receiving unit may be replaced with a receiver, and another unit such as a determining unit may be replaced with a processor, to respectively perform a sending operation, a receiving operation, and a related processing operation in the method embodiments.

In this embodiment of this application, the apparatus in FIG. 14 may alternatively be a chip or a chip system, for example, a system on chip (system on chip, SoC). Correspondingly, the receiving unit and the sending unit may be a transceiver circuit of the chip. This is not limited herein.

FIG. 15 shows another apparatus 1500 for Ethernet data according to an embodiment of this application. The apparatus 1500 includes a processor 1510, a transceiver 1520, and a memory 1530. The processor 1510, the transceiver 1520, and the memory 1530 communicate with each other through an internal connection path. The memory 1530 is configured to store an instruction. The processor 1510 is configured to execute the instruction stored in the memory 1530, to control the transceiver 1520 to send a signal and/or receive a signal.

In a possible implementation, the apparatus 1500 is configured to perform procedures and steps corresponding to the terminal device in the method 300.

The transceiver 1520 is configured to receive compression configuration information from a network device, where the compression configuration information is used to indicate a parameter of a first Ethernet compression capability. The processor 1510 is configured to generate a first Ethernet packet based on the parameter of the first Ethernet compression capability. The transceiver 1520 is further configured to send the first Ethernet packet to the network device.

In another possible implementation, the apparatus 1500 is configured to perform procedures and steps corresponding to the network device in the method 300.

The transceiver 1520 is configured to: send compression configuration information to a terminal device, where the compression configuration information is used to indicate a parameter of a first Ethernet compression capability; and receive a first Ethernet packet, where the first Ethernet packet is generated based on the parameter of the first Ethernet compression capability. The processor 1510 is configured to decompress the first Ethernet packet.

In another possible implementation, the apparatus 1500 is configured to perform procedures and steps corresponding to the terminal device in the method 400.

The transceiver 1520 is configured to: receive compression configuration information from a network device, where the compression configuration information is used to indicate a parameter of a third Ethernet compression capability; and receive a third Ethernet packet from the network device, where the third Ethernet packet is generated based on the parameter of the third Ethernet compression capability. The processor 1510 is configured to decompress the third Ethernet packet.

In another possible implementation, the apparatus 1500 is configured to perform procedures and steps corresponding to the network device in the method 400.

The transceiver 1520 is configured to send compression configuration information to a terminal device, where the compression configuration information is used to indicate a parameter of a third Ethernet compression capability. The processor 1510 is configured to generate a third Ethernet packet based on the parameter of the third Ethernet compression capability. The transceiver 1520 is further configured to send the third Ethernet packet to the terminal device.

In another possible implementation, the apparatus 1500 is configured to perform procedures and steps corresponding to the transmit end in the method 500.

The processor 1510 is configured to generate a fifth Ethernet packet, where the fifth Ethernet packet includes a fifth header, the fifth header includes a fifth context identifier, and the fifth context identifier is used to identify fifth context information. The transceiver 1520 is configured to send the fifth Ethernet packet to a receive end.

In another possible implementation, the apparatus 1500 is configured to perform procedures and steps corresponding to the receive end in the method 500.

The transceiver 1520 is configured to receive a fifth Ethernet packet, where the fifth Ethernet packet includes a fifth header, the fifth header includes a fifth context identifier, and the fifth context identifier is used to identify fifth context information. The processor 1510 is configured to obtain the fifth context information based on the fifth context identifier. The processor 1510 is further configured to decompress the fifth Ethernet packet based on the fifth context information.

In another possible implementation, the apparatus 1500 is configured to perform procedures and steps corresponding to the terminal device in the method 600.

The transceiver 1520 is configured to receive downlink control information DCI from a network device, where the DCI is scrambled by using a first radio network temporary identifier RNTI, the first RNTI is an RNTI for an Ethernet packet, and the DCI includes information used to indicate a time-frequency resource carrying the Ethernet packet. The transceiver 1520 is further configured to receive the Ethernet packet from the network device on the time-frequency resource indicated by the DCI.

In another possible implementation, the apparatus 1500 is configured to perform procedures and steps corresponding to the network device in the method 600.

The transceiver 1520 is configured to send downlink control information DCI to a terminal device, where the DCI is scrambled by using a first radio network temporary identifier RNTI, the first RNTI is an RNTI for an Ethernet packet, and the DCI includes information used to indicate a time-frequency resource carrying the Ethernet packet. The transceiver 1520 is further configured to send the Ethernet packet to the terminal device on the time-frequency resource.

In another possible implementation, the apparatus 1500 is configured to perform procedures and steps corresponding to the terminal device in the method 700.

The transceiver 1520 is configured to receive a system information block SIB from a network device, where the SIB includes an Ethernet packet. The processor 1510 is configured to obtain the Ethernet packet from the SIB.

In another possible implementation, the apparatus 1500 is configured to perform procedures and steps corresponding to the network device in the method 700.

The processor 1510 is configured to generate a system information block SIB, where the SIB includes an Ethernet packet. The transceiver 1520 is configured to send the SIB.

In another possible implementation, the apparatus 1500 is configured to perform procedures and steps corresponding to the terminal device in the method 800.

The transceiver 1520 is configured to receive a request message from a network device, where the request message is used to request a media access control MAC address associated with the apparatus. The transceiver 1520 is further configured to send the MAC address to the network device.

In another possible implementation, the apparatus 1500 is configured to perform procedures and steps corresponding to the network device in the method 800.

The transceiver 1520 is configured to send a request message to a terminal device, where the request message is used to request a media access control MAC address associated with the terminal device. The transceiver 1520 is further configured to receive the MAC address from the terminal device.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely division into logical functions and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electric, mechanical, or another form.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method for Ethernet data, wherein the method comprises:
receiving (S610), by a terminal device, downlink control information, DCI, from a network device, wherein the DCI is scrambled by using a first radio network temporary identifier, RNTI, the first RNTI is an RNTI for a broadcast-type or groupcast-type Ethernet packet, and the DCI comprises information used to indicate a time-frequency resource carrying the Ethernet packet; and
receiving (S630), by the terminal device, a system information block, SIB, from the network device on the time-frequency resource indicated by the DCI, wherein the SIB comprises the Ethernet packet.

2. The method according to claim 1, wherein the DCI comprises first information; and
the first information is used to indicate that the packet scheduled by using the DCI is a broadcast-type or groupcast-type Ethernet packet.

3. The method according to claim 1 or 2, wherein the method further comprises:
sending (820), by the terminal device to the network device, a media access control, MAC, address associated with the terminal device.

4. The method according to claim 3, wherein the method further comprises:
receiving (810), by the terminal device, a request message from the network device, wherein the request message is used to request the MAC address associated with the terminal device.

5. The method according to any one of claims 1 to 4, wherein the method further comprises:
sending (S410), by the terminal device, compression capability information to the network device, wherein the compression capability information is used to indicate N Ethernet compression capabilities supported by the terminal device, wherein N is an integer greater than or equal to 1;
receiving (S420), by the terminal device, compression configuration information from the network device, wherein the compression configuration information is used to indicate a parameter of a first Ethernet compression capability, and the N Ethernet compression capabilities comprise the first Ethernet compression capability; and
decompressing (S450), by the terminal device, the Ethernet packet, wherein the Ethernet packet is generated based on the parameter of the first Ethernet compression capability.

6. The method according to claim 5, wherein the Ethernet packet comprises a first header, the first header comprises a first context identifier, and the first context identifier is used to identify first context information; and the method further comprises:
obtaining, by the terminal device, the first context information based on the first context identifier; and
the decompressing, by the terminal device, the Ethernet packet comprises:
decompressing, by the terminal device, the Ethernet packet based on the first context information.

7. A communication method for Ethernet data, wherein the method comprises:
sending (S610), by a network device, downlink control information, DCI, to a terminal device, wherein the DCI is scrambled by using a first radio network temporary identifier, RNTI, the first RNTI is an RNTI for a broadcast-type or groupcast-type Ethernet packet, and the DCI comprises information used to indicate a time-frequency resource carrying the Ethernet packet; and
sending (S620), by the network device, a system information block, SIB, to the terminal device on the time-frequency resource, wherein the SIB comprises the Ethernet packet.

8. The method according to claim 7, wherein the DCI comprises first information, and the first information is used to indicate that the packet scheduled by using the DCI is a broadcast-type or groupcast-type Ethernet packet.

9. The method according to claim 7 or 8, wherein the network device is an access network device, and a common quality of service, QoS, flow is established between the access network device and a core network device; and
the method further comprises:
receiving, by the network device, the Ethernet packet from the common QoS flow.

10. The method according to any one of claims 7 to 9, wherein the method further comprises:
receiving (S820), by the network device from the terminal device, a media access control, MAC, address associated with the terminal device.

11. The method according to claim 10, wherein the method further comprises:
sending (S810), by the network device, a request message to the terminal device, wherein the request message is used to request the MAC address associated with the terminal device.

12. The method according to any one of claims 7 to 11, wherein the method further comprises:
receiving (S410), by the network device, compression capability information from the terminal device, wherein the compression capability information is used to indicate N Ethernet compression capabilities supported by the terminal device, wherein N is an integer greater than or equal to 1;
sending (S420), by the network device, compression configuration information to the terminal device, wherein the compression configuration information is used to indicate a parameter of a first Ethernet compression capability, and the N Ethernet compression capabilities comprise the first Ethernet compression capability; and
generating (S430), by the network device, the Ethernet packet based on the parameter of the first Ethernet compression capability.

13. An apparatus for Ethernet data, configured to implement the method according to any one of claims 1 to 6.

14. An apparatus for Ethernet data, configured to implement the method according to any one of claims 7 to 12.

15. A computer storage medium, configured to store a program comprising instructions which, when the program is executed by a computer, cause the computer to carry out a method as defined in claims 1 to 6.

16. A computer storage medium, configured to store a program comprising instructions which, when the program is executed by a computer, cause the computer to carry out a method as defined in claims 7 to 12.

## Patentansprüche

1. Kommunikationsverfahren für Ethernet-Daten, wobei das Verfahren Folgendes umfasst:
Empfangen (S610), durch ein Endgerät, von Downlink-Steuerinformationen bzw. DCI von einer Netzvorrichtung, wobei die DCI unter Verwendung einer ersten temporären Funknetzkennung bzw. RNTI verwürfelt werden, wobei die erste RNTI eine RNTI für ein Broadcast- oder "Groupcast"-Ethernet-Paket ist und die DCI Informationen umfassen, die zum Angeben einer Zeit-Frequenz-Ressource, die das Ethernet-Paket führt, verwendet werden; und
Empfangen (S630), durch das Endgerät, eines Systeminformationsblocks bzw. SIB von der Netzvorrichtung auf der durch die DCI angegebenen Zeit-Frequenz-Ressource, wobei der SIB das Ethernet-Paket umfasst.

2. Verfahren nach Anspruch 1, wobei die DCI erste Informationen umfassen; und
die ersten Informationen verwendet werden, um anzugeben, dass das unter Verwendung der DCI geplante Paket ein Broadcast- oder "Groupcast"-Ethernet-Paket ist.

3. Verfahren nach Anspruch 1 oder 2, wobei das Verfahren ferner Folgendes umfasst:
Senden (820), durch das Endgerät an die Netzvorrichtung, einer mit dem Endgerät assoziierten Medienzugriffssteuerungs- bzw. MAC-Adresse.

4. Verfahren nach Anspruch 3, wobei das Verfahren ferner Folgendes umfasst:
Empfangen (810), durch das Endgerät, einer Anforderungsnachricht von der Netzvorrichtung, wobei die Anforderungsnachricht zum Anfordern der mit dem Endgerät assoziierten MAC-Adresse verwendet wird.

5. Verfahren nach einem der Ansprüche 1 bis 4, wobei das Verfahren ferner Folgendes umfasst:
Senden (S410), durch das Endgerät, von Komprimierungsfähigkeitsinformationen an die Netzvorrichtung, wobei die Komprimierungsfähigkeitsinformationen verwendet werden, um N Ethernet-Komprimierungsfähigkeiten, die durch das Endgerät unterstützt werden, anzugeben, wobei N eine ganze Zahl größer oder gleich 1 ist;
Empfangen (S420), durch das Endgerät, von Komprimierungskonfigurationsinformationen von der Netzvorrichtung, wobei die Komprimierungskonfigurationsinformationen verwendet werden, um einen Parameter einer ersten Ethernet-Komprimierungsfähigkeit anzugeben, und die N Ethernet-Komprimierungsfähigkeiten die erste Ethernet-Komprimierungsfähigkeit umfassen; und
Dekomprimieren (S450), durch das Endgerät, des Ethernet-Pakets, wobei das Ethernet-Paket basierend auf dem Parameter der ersten Ethernet-Komprimierungsfähigkeit erzeugt wird.

6. Verfahren nach Anspruch 5, wobei das Ethernet-Paket einen ersten Header umfasst, der erste Header eine erste Kontextkennung umfasst und die erste Kontextkennung zum Identifizieren von ersten Kontextinformationen verwendet wird; und das Verfahren ferner Folgendes umfasst:
Erhalten, durch das Endgerät, der ersten Kontextinformationen basierend auf der ersten Kontextkennung; und
das Dekomprimieren, durch das Endgerät, des Ethernet-Pakets Folgendes umfasst: Dekomprimieren, durch das Endgerät, des Ethernet-Pakets basierend auf den ersten Kontextinformationen.

7. Kommunikationsverfahren für Ethernet-Daten, wobei das Verfahren Folgendes umfasst:
Senden (S610), durch eine Netzvorrichtung, von Downlink-Steuerinformationen bzw. DCI an ein Endgerät, wobei die DCI unter Verwendung einer ersten temporären Funknetzkennung bzw. RNTI verwürfelt werden, wobei die erste RNTI eine RNTI für ein Broadcast- oder "Groupcast"-Ethernet-Paket ist und die DCI Informationen umfassen, die zum Angeben einer Zeit-Frequenz-Ressource, die das Ethernet-Paket führt, verwendet werden; und
Senden (S620), durch die Netzvorrichtung, eines Systeminformationsblocks bzw. SIB an das Endgerät auf der Zeit-Frequenz-Ressource, wobei der SIB das Ethernet-Paket umfasst.

8. Verfahren nach Anspruch 7, wobei die DCI erste Informationen umfassen und die ersten Informationen verwendet werden, um anzugeben, dass das unter Verwendung der DCI geplante Paket ein Broadcast- oder "Groupcast"-Ethernet-Paket ist.

9. Verfahren nach Anspruch 7 oder 8, wobei die Netzvorrichtung eine Zugangsnetzvorrichtung ist und ein gemeinsamer Dienstgüte- bzw. QoS-Fluss zwischen der Zugangsnetzvorrichtung und einer Kernnetzvorrichtung besteht; und das Verfahren ferner Folgendes umfasst:
Empfangen, durch die Netzvorrichtung, des Ethernet-Pakets aus dem gemeinsamen QoS-Fluss.

10. Verfahren nach einem der Ansprüche 7 bis 9, wobei das Verfahren ferner Folgendes umfasst:
Empfangen (S820), durch die Netzvorrichtung von dem Endgerät, einer mit dem Endgerät assoziierten Medienzugriffssteuerungs- bzw. MAC-Adresse.

11. Verfahren nach Anspruch 10, wobei das Verfahren ferner Folgendes umfasst:
Senden (S810), durch die Netzvorrichtung, einer Anforderungsnachricht an das Endgerät, wobei die Anforderungsnachricht zum Anfordern der mit dem Endgerät assoziierten MAC-Adresse verwendet wird.

12. Verfahren nach einem der Ansprüche 7 bis 11, wobei das Verfahren ferner Folgendes umfasst:
Empfangen (S410), durch die Netzvorrichtung, von Komprimierungsfähigkeitsinformationen von dem Endgerät, wobei die Komprimierungsfähigkeitsinformationen verwendet werden, um N Ethernet-Komprimierungsfähigkeiten, die durch das Endgerät unterstützt werden, anzugeben, wobei N eine ganze Zahl größer oder gleich 1 ist;
Senden (S420), durch die Netzvorrichtung, von Komprimierungskonfigurationsinformationen an das Endgerät, wobei die Komprimierungskonfigurationsinformationen verwendet werden, um einen Parameter einer ersten Ethernet-Komprimierungsfähigkeit anzugeben, und die N Ethernet-Komprimierungsfähigkeiten die erste Ethernet-Komprimierungsfähigkeit umfassen; und
Erzeugen (S430), durch die Netzvorrichtung, des Ethernet-Pakets basierend auf dem Parameter der ersten Ethernet-Komprimierungsfähigkeit.

13. Einrichtung für Ethernet-Daten, die zum Implementieren des Verfahrens nach einem der Ansprüche 1 bis 6 ausgelegt ist.

14. Einrichtung für Ethernet-Daten, die zum Implementieren des Verfahrens nach einem der Ansprüche 7 bis 12 ausgelegt ist.

15. Computerspeichermedium, ausgelegt zum Speichern eines Programms, das Anweisungen umfasst, die bei Ausführung des Programms durch einen Computer bewirken, dass der Computer ein Verfahren nach den Ansprüchen 1 bis 6 ausführt.

16. Computerspeichermedium, ausgelegt zum Speichern eines Programms, das Anweisungen umfasst, die bei Ausführung des Programms durch einen Computer bewirken, dass der Computer ein Verfahren nach den Ansprüchen 7 bis 12 ausführt.

## Revendications

1. Procédé de communication pour données Ethernet, dans lequel le procédé comprend :
la réception (S610), par un dispositif de terminal, d'informations de commande de liaison descendante, DCI, à partir d'un dispositif de réseau, dans lequel les DCI sont brouillées en utilisant un premier identifiant temporaire de réseau radio, RNTI, le premier RNTI est un RNTI pour un paquet Ethernet de type diffusion générale ou de type diffusion en groupe, et les DCI comprennent des informations utilisées pour indiquer une ressource de temps-fréquence portant le paquet Ethernet ; et
la réception (S630), par le dispositif de terminal, d'un bloc d'informations de système, SIB, à partir du dispositif de réseau, sur la ressource de temps-fréquence indiquée par les DCI, dans lequel le SIB comprend le paquet Ethernet.

2. Procédé selon la revendication 1, dans lequel les DCI comprennent des premières informations ; et
les premières informations sont utilisées pour indiquer que le paquet ordonnancé en utilisant les DCI est un paquet Ethernet de type diffusion générale ou de type diffusion en groupe.

3. Procédé selon la revendication 1 ou 2, dans lequel le procédé comprend en outre :
l'envoi (820), par le dispositif de terminal, au dispositif de réseau, d'une adresse de contrôle d'accès au support, MAC, associée au dispositif de terminal.

4. Procédé selon la revendication 3, dans lequel le procédé comprend en outre :
la réception (810), par le dispositif de terminal, d'un message de demande, à partir du dispositif de réseau, dans lequel le message de demande est utilisé pour demander l'adresse de MAC associée au dispositif de terminal.

5. Procédé selon l'une quelconque des revendications 1 à 4, dans lequel le procédé comprend en outre :
l'envoi (S410), par le dispositif de terminal, d'informations de capacité de compression, au dispositif de réseau, dans lequel les informations de capacité de compression sont utilisées pour indiquer N capacités de compression Ethernet prises en charge par le dispositif de terminal, dans lequel N est un nombre entier relatif supérieur ou égal à 1 ;
la réception (S420), par le dispositif de terminal, d'informations de configuration de compression, à partir du dispositif de réseau, dans lequel les informations de configuration de compression sont utilisées pour indiquer un paramètre d'une première capacité de compression Ethernet, et les N capacités de compression Ethernet comprennent la première capacité de compression Ethernet ; et
la décompression (S450), par le dispositif de terminal, du paquet Ethernet, dans lequel le paquet Ethernet est généré sur la base du paramètre de la première capacité de compression Ethernet.

6. Procédé selon la revendication 5, dans lequel le paquet Ethernet comprend un premier en-tête, le premier en-tête comprend un premier identifiant de contexte, et le premier identifiant de contexte est utilisé pour identifier des premières informations de contexte ; et le procédé comprend en outre :
l'obtention, par le dispositif de terminal, des premières informations de contexte, sur la base du premier identifiant de contexte ; et
la décompression, par le dispositif de terminal, du paquet Ethernet comprend :
la décompression, par le dispositif de terminal, du paquet Ethernet, sur la base des premières informations de contexte.

7. Procédé de communication pour données Ethernet, dans lequel le procédé comprend :
l'envoi (S610), par un dispositif de réseau, d'informations de commande de liaison descendante, DCI, à un dispositif de terminal, dans lequel les DCI sont brouillées en utilisant un premier identifiant temporaire de réseau radio, RNTI, le premier RNTI est un RNTI pour un paquet Ethernet de type diffusion générale ou de type diffusion en groupe, et les DCI comprennent des informations utilisées pour indiquer une ressource de temps-fréquence portant le paquet Ethernet ; et
l'envoi (S620), par le dispositif de réseau, d'un bloc d'informations de système, SIB, au dispositif de terminal, sur la ressource de temps-fréquence, dans lequel le SIB comprend le paquet Ethernet.

8. Procédé selon la revendication 7, dans lequel les DCI comprennent des premières informations, et les premières informations sont utilisées pour indiquer que le paquet ordonnancé en utilisant les DCI est un paquet Ethernet de type diffusion générale ou de type diffusion en groupe.

9. Procédé selon la revendication 7 ou 8, dans lequel le dispositif de réseau est un dispositif de réseau d'accès, et un flux de qualité de service, QoS, commun est établi entre le dispositif de réseau d'accès et un dispositif de réseau d'infrastructure ; et
le procédé comprend en outre :
la réception, par le dispositif de réseau, du paquet Ethernet, à partir du flux de QoS commun.

10. Procédé selon l'une quelconque des revendications 7 à 9, dans lequel le procédé comprend en outre :
la réception (S820), par le dispositif de réseau, à partir du dispositif de terminal, d'une adresse de contrôle d'accès au support, MAC, associée au dispositif de terminal.

11. Procédé selon la revendication 10, dans lequel le procédé comprend en outre :
l'envoi (S810), par le dispositif de réseau, d'un message de demande, au dispositif de terminal, dans lequel le message de demande est utilisé pour demander l'adresse de MAC associée au dispositif de terminal.

12. Procédé selon l'une quelconque des revendications 7 à 11, dans lequel le procédé comprend en outre :
la réception (S4 10), par le dispositif de réseau, d'informations de capacité de compression, à partir du dispositif de terminal, dans lequel les informations de capacité de compression sont utilisées pour indiquer N capacités de compression Ethernet prises en charge par le dispositif de terminal, dans lequel N est un nombre entier relatif supérieur ou égal à 1 ;
l'envoi (S420), par le dispositif de réseau, d'informations de configuration de compression, au dispositif de terminal, dans lequel les informations de configuration de compression sont utilisées pour indiquer un paramètre d'une première capacité de compression Ethernet, et les N capacités de compression Ethernet comprennent la première capacité de compression Ethernet ; et
la génération (S430), par le dispositif de réseau, du paquet Ethernet, sur la base du paramètre de la première capacité de compression Ethernet.

13. Appareil pour données Ethernet, configuré pour mettre en oeuvre le procédé selon l'une quelconque des revendications 1 à 6.

14. Appareil pour données Ethernet, configuré pour mettre en oeuvre le procédé selon l'une quelconque des revendications 7 à 12.

15. Support de stockage pour ordinateur, configuré pour stocker un programme comprenant des instructions qui, lorsque le programme est exécuté par un ordinateur, font en sorte que l'ordinateur réalise un procédé tel que défini dans les revendications 1 à 6.

16. Support de stockage pour ordinateur, configuré pour stocker un programme comprenant des instructions qui, lorsque le programme est exécuté par un ordinateur, font en sorte que l'ordinateur réalise un procédé tel que défini dans les revendications 7 à 12.
